# EUROPEAN PATENT SPECIFICATION

(11) **EP 4 398 330 B1**
(45) Date of publication and mention of the grant of the patent: **25.11.2026**
(21) Application number: 21959704.4
(22) Date of filing: 08.10.2021
(51) Int. Cl.: H01M 4/13, H01M 4/131, H01M 4/36, H01M 4/525, H01M 4/62, H01M 10/052, H01M 10/0525, H01M 4/02

(54) **ELECTROCHEMICAL DEVICE AND ELECTRONIC DEVICE**
ELEKTROCHEMISCHE VORRICHTUNG UND ELEKTRONISCHE VORRICHTUNG
DISPOSITIF ÉLECTROCHIMIQUE ET DISPOSITIF ÉLECTRONIQUE

(43) Date of publication of application: 10.07.2024
(73) Proprietor: Ningde Amperex Technology Limited, Zhangwan Town, Jiaocheng District Ningde City Fujian 352100 (CN)
(72) Inventor: WANG, Kefei, Ningde City, Fujian 352100 (CN); HAN, Dongdong, Ningde City, Fujian 352100 (CN); ZHANG, Qingwen, Ningde City, Fujian 352100 (CN); LIU, Shengqi, Ningde City, Fujian 352100 (CN)
(74) Representative: Kraus & Lederer PartGmbB
(86) International application number: PCT/CN2021/122705
(87) International publication number: WO 2023/056612

(56) References cited:
- WO-A1-2021/032380
- WO-A1-2021/189481
- CN-A- 105 703 010
- CN-A- 105 703 010
- CN-A- 109 004 171
- CN-A- 109 004 171
- CN-A- 109 461 882
- CN-A- 111 403 749
- CN-A- 111 554 879
- CN-A- 111 916 663
- CN-A- 111 916 663
- CN-A- 112 234 163
- CN-A- 113 193 162
- CN-A- 113 410 427
- JP-A- 2015 050 280
- US-A1- 2020 144 600

## Description

### TECHNICAL FIELD

This application relates to the field of energy storage, and specifically, to an electrochemical device and an electronic device.

### BACKGROUND

In recent years, people have increasingly high requirements for energy density of electrochemical devices. However, while in pursuit of high energy density, the associated safety issues have become more prominent. For example, when the electrochemical device is subjected to misuse such as compression, nail penetration, or overcharging, short circuit easily occurs inside the electrochemical device, and a large amount of heat is accumulated, causing thermal runaway, and even the problems such as fire and explosion.

The safety of electrochemical devices during use can be improved to some extent by changing the configuration of the electrode plate in electrochemical devices. For example, in the prior art, providing a safety coating on the surface of the electrode plate can increase the contact internal resistance, reducing the risk of thermal runaway. However, the provision of the safety coating (for example, a ceramic layer) reduces the energy density of the electrochemical device and deteriorates other electrochemical performance. Therefore, how the energy density and electrochemical performance of electrochemical devices are enhanced while guaranteeing the safety performance of electrochemical devices has gained an increasing attention. Document US 2020/144600 A1 discloses a Li-ion battery comprising, as cathode, a cathode current collector; a first cathode active material layer, comprising a first cathode active material; and a second cathode active material layer, comprising a second cathode active material, wherein the first cathode active material layer is disposed between the cathode current collector and the second cathode active material layer, and the first cathode active material layer is formed on at least one surface of the cathode current collector. the content of the binder of the first cathode active material layer is greater than the content of the binder of the second cathode active material layer, thereby ensuring the adhesion between the first cathode active material layer and the cathode current collector, and avoiding the occurrence of a cathode current collector-negative active material layer or cathode current collector-steel nail-negative active material layer short-circuit mode during the nail penetration test.

### SUMMARY

The invention is defined by the appended claims.

This application is intended to solve the problems in the prior art to some extent by improving configuration of a positive electrode of an electrochemical device and matching between the positive electrode and an electrolyte.

According to an aspect of this application, this application provides an electrochemical device, including a positive electrode, a negative electrode, and an electrolyte, where the positive electrode includes: a current collector; and a positive electrode active material layer, where the positive electrode active material layer is located on at least one surface of the current collector and includes a first positive electrode active material layer and a second positive electrode active material layer, the first positive electrode active material layer being located between the current collector and the second positive electrode active material layer, where an adhesion force between the current collector and the first positive electrode active material layer is F₁ N/m, and a cohesion force of the second positive electrode active material layer is F₂ N/m, the positive electrode satisfying F₁/F₂ ≥ 6. The first positive electrode active material layer comprises a first binder. The second positive electrode active material layer comprises a second binder. The first binder comprises polyacrylate containing polar functional groups, and the second binder is a water-insoluble fluoropolymer.

According to an embodiment of this application, in the electrochemical device, F₁ ≥ 200.

According to an embodiment of this application, in the electrochemical device, the first positive electrode active material layer includes a first binder, and the first binder satisfies at least one of the following conditions: (1) the first binder is water-soluble; (2) based on a mass of the first positive electrode active material layer, a mass fraction of the first binder is b%, where 2 ≤ b ≤ 20.

According to an embodiment of this application, in the electrochemical device, based on a mass of the first positive electrode active material layer, a mass fraction of the first binder is b%, where F₁ and b satisfy F₁ ≥ 200, 2 ≤ b ≤ 20, and F₁/b ≥ 10.

According to an embodiment of this application, in the electrochemical device, the second binder satisfies at least one of the following conditions: (1) the second binder includes polyvinylidene fluoride containing an α crystalline form; or (2) based on a mass of the second positive electrode active material layer, a mass fraction of the second binder is a%, where 0.5 ≤ a ≤ 5.

According to an embodiment of this application, in the electrochemical device, based on a mass of the second positive electrode active material layer, a mass fraction of the second binder is a%, where F₂ and a satisfy 5 ≤ F₂ ≤ 60, 0.5 ≤ a ≤ 5, and F₂/a ≥ 1.

According to an embodiment of this application, in the electrochemical device, the first positive electrode active material layer includes a water-soluble binder.

According to an embodiment of this application, in the electrochemical device, based on a mass of the first positive electrode active material layer, a mass fraction of the first binder is b%; and the second positive electrode active material layer includes a second binder, and based on a mass of the second positive electrode active material layer, a mass fraction of the second binder is a%; where a and b satisfy 2.5 ≤ a + b ≤ 25 and 1 ≤ b/a ≤ 40.

According to an embodiment of this application, in the electrochemical device, thickness of the first positive electrode active material layer is H₁ µm, and thickness of the positive electrode active material layer is H µm, the positive electrode satisfying H₁/H ≤ 0.1.

According to an embodiment of this application, in the electrochemical device, 0.1 ≤ H₁ ≤ 5.

According to an embodiment of this application, in the electrochemical device, the electrolyte includes a compound containing a cyano group.

According to an embodiment of this application, in the electrochemical device, based on a mass of the electrolyte, a percentage of the compound containing a cyano group is x%, where 0.1 ≤ x ≤ 15.

According to an embodiment of this application, in the electrochemical device, F₁ ≥ 200 and F₁/x ≥ 13.33.

According to an embodiment of this application, in the electrochemical device, the compound containing a cyano group includes at least one of succinonitrile, glutaronitrile, adiponitrile, 1,5-dicyanopentane, 1,6-dicyanohexane, tetramethylsuccinonitrile, 2-methylglutaronitrile, 2,4-dimethylglutaronitrile, 2,2,4,4-tetramethylglutaronitrile, 1,4-dicyanopentane, 1,2-dicyanobenzene, 1,3-dicyanobenzene, 1,4-dicyanobenzene, ethylene glycol bis(propionitrile) ether, 3,5-dioxa-pimelonitrile, 1,4-bis(cyanoethoxy)butane, diethylene glycol bis(2-cyanoethyl) ether, triethylene glycol bis(2-cyanoethyl) ether, tetraethylene glycol bis(2-cyanoethyl) ether, 1,3-bis(2-cyanoethoxy)propane, 1,4-bis(2-cyanoethoxy)butane, 1,5-bis(2-cyanoethoxy)pentane, ethylene glycol bis(4-cyanobutyl) ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane, or 1,2,5-tris(cyanoethoxy)pentane.

According to an embodiment of this application, in the electrochemical device, the electrolyte includes propylene carbonate.

According to an embodiment of this application, in the electrochemical device, based on a mass of the electrolyte, a percentage of the propylene carbonate is y%, where 2 ≤ y ≤ 25.

According to an embodiment of this application, in the electrochemical device, based on a mass of the electrolyte, a percentage of the propylene carbonate is y%, where F₂/y ≥ 0.5.

According to an embodiment of this application, in the electrochemical device, the electrolyte includes propyl propionate, and based on a mass of the electrolyte, a percentage of the propyl propionate is z%, where 5 ≤ z ≤ 50.

According to an embodiment of this application, in the electrochemical device, the electrolyte includes a compound containing a cyano group and propyl propionate, where based on a mass of the electrolyte, a percentage of the compound containing a cyano group is x% and a percentage of the propyl propionate is z%, where 12 ≤ x + z ≤ 65 and 0.5 ≤ z/x ≤ 50.

According to an embodiment of this application, in the electrochemical device, the electrolyte includes propylene carbonate and propyl propionate, where based on a mass of the electrolyte, a percentage of the propylene carbonate is y% and a percentage of the propyl propionate is z%, where 15 ≤ y + z ≤ 70 and 1 ≤ z/y ≤ 5.

According to an embodiment of this application, in the electrochemical device, the electrolyte includes at least one of fluoroethylene carbonate, 1,3-propane sultone, vinyl sulfate, vinylene carbonate, or 1-propylphosphoric acid cyclic anhydride.

According to an aspect of this application, this application provides an electronic device, including the electrochemical device described in the foregoing embodiments.

According to at least one aspect, controlling the adhesion force F₁ between the first positive electrode active material layer and the current collector and the cohesion force F₂ of the second positive electrode active material layer within appropriate ranges can effectively reduce the probability of internal short circuit of the electrochemical device in the case of misuse such as compression, nail penetration, or overcharging, thereby improving safety of the electrochemical device. In addition, this can also effectively improve cycling performance of the electrochemical device at high voltage and high temperature, and reduce direct current internal resistance of the electrochemical device at high voltage and high temperature.

Additional aspects and advantages of some embodiments of this application are partly described and presented in subsequent descriptions, or explained by implementation of some embodiments of this application.

### DETAILED DESCRIPTION OF EMBODIMENTS

Embodiments of this application are described in detail below. Same or similar components and components with same or similar functions are denoted with similar reference signs throughout this specification of this application. Embodiments in related accompanying drawings described herein are descriptive and illustrative, and are used to provide a basic understanding of this application. The embodiments of this application should not be construed as any limitations on this application.

Quantities, ratios, and other values are presented in the format of range in this specification. It should be understood that such format of range is used for convenience and simplicity and should be flexibly understood as including not only values explicitly designated as falling within the range but also all individual values or sub-ranges covered by the range as if each value and sub-range are explicitly designated.

In specific embodiments and claims, a list of items connected by the term "at least one of" may mean any combination of the listed items. For example, if items A and B are listed, the phrase "at least one of A or B" means only A, only B, or A and B. In another example, if items A, B, and C are listed, the phrase "at least one of A, B, or C" means only A, only B, only C, A and B (exclusive of C), A and C (exclusive of B), B and C (exclusive of A), or all of A, B, and C. The item A may include a single element or a plurality of elements. The item B may include a single element or a plurality of elements. The item C may include a single element or a plurality of elements. The term "at least one type of" has the same meaning as the term "at least one of".

### I. Positive electrode

In this application, the positive electrode includes a positive electrode current collector and a positive electrode active material layer disposed on at least one surface of the positive electrode current collector, where the positive electrode active material layer includes a positive electrode active material and a binder. In this application, the positive electrode active material may be any material capable of reversibly intercalating and deintercalating metal ions such as lithium ions and sodium ions. In some embodiments, the positive electrode current collector may be a positive electrode current collector commonly used in the art, and includes but is not limited to aluminum foil or nickel foil.

According to at least one aspect, it has been found in this application that applying at least two positive electrode active material layers onto at least one surface of the positive electrode current collector and controlling a cohesion force and adhesion force of the at least two positive electrode active material layers within appropriate ranges can improve safety performance of the electrochemical device, reduce direct current internal resistance of the electrochemical device at high temperature and high voltage, and improve cycling stability of the electrochemical device.

Specifically, in some embodiments, this application provides a positive electrode, including a current collector and a positive electrode active material layer. The positive electrode active material layer is located on at least one surface of the current collector and includes a first positive electrode active material layer and a second positive electrode active material layer, the first positive electrode active material layer being located between the current collector and the second positive electrode active material layer, where an adhesion force between the current collector and the first positive electrode active material layer is F₁ N/m, and a cohesion force of the second positive electrode active material layer is F₂ N/m, the positive electrode satisfying F₁/F₂ ≥ 6.

There are forces between different layers of an electrode plate of the electrochemical device and within each layer. For example, during charge/discharge cycles of the electrochemical device, deintercalation and intercalation of active metal ions (for example, lithium ions) in active material particles may cause the active material particles to expand or crack, resulting in interaction forces between the current collector, first active material layer, and second active material layer of the electrode plate. The value of F₁/F₂ can reflect mechanical stability of the positive electrode of the electrochemical device in the case of misuse such as compression, nail penetration, or overcharging or during charge/discharge cycles. When the value of F₁/F₂ satisfies the relation F₁/F₂ ≥ 6, stress is evenly distributed on the electrode plate and the current collector, resulting in lower probability of misalignment or short circuit in the case of compression or nail penetration or during charge/discharge cycles at high temperature and high voltage, thereby effectively improving the safety of the electrochemical device and effectively improving cycling performance of the electrochemical device at high temperature and high voltage. In addition, unexpectedly, the positive electrode can also reduce the direct current internal resistance of the electrochemical device at high temperature and high voltage.

In some embodiments, F₁ and F₂ satisfy F₁/F₂ ≥ 10. In some embodiments, F₁ and F₂ satisfy F₁/F₂ ≥ 20. In some embodiments, F₁ and F₂ satisfy F₁/F₂ ≥ 30. In some embodiments, F₁ and F₂ satisfy F₁/F₂ ≥ 40. In some embodiments, F₁ and F₂ satisfy F₁/F₂ ≥ 50. The electrochemical device satisfying the foregoing relation can have further improved performance, especially in safety, stability, cycling performance, and impedance reduction.

As the adhesion force F₁ between the positive electrode current collector and the first positive electrode active material layer increases, the probability of film falling between the positive electrode active material layer and the current collector decreases, leading to lower risk of internal short circuit and higher thermal safety performance of the electrochemical device at high temperature and high voltage or in the case of misuse. In some embodiments, F₁ ≥ 200. In some embodiments, F₁ ≥ 220. In some embodiments, F₁ is 250, 300, 350, 400, 450, 500, 600, 700, or 800, or falls within a range defined by any two of these values.

In some embodiments, 5 ≤ F₂ ≤ 100. In some embodiments, 15 ≤ F₂ ≤ 80. In some embodiments, F₂ is 20, 25, 30, 35, 40, 45, 50, 60, 70, 80, 90, or 100, or falls within a range defined by any two of these values.

It has been found in this application that selecting at least type or percentage of a binder in the first positive electrode active material layer and/or the second positive electrode active material layer helps to further implement F₁/F₂ ≥ 6.

The first positive electrode active material layer includes a first binder, and the first binder comprises polyacrylate containing polar functional groups. Optionally the first binder also satisfies at least one of the following conditions:
(1) the first binder is water-soluble;
(2) based on a mass of the first positive electrode active material layer, a mass fraction of the first binder is b%, where 2 ≤ b ≤ 20.

The water-soluble binder being used in the first positive electrode active material layer can more effectively improve the performance of the electrochemical device. A possible reason is that hydrogen bonding or other intermolecular forces between the water-soluble binder and the polar functional groups such as hydroxyl groups on the surface of the positive electrode current collector (for example, aluminum foil) increase the adhesion force between the positive electrode active material layer and the current collector and greatly reduce the risk of the active material layer falling off the current collector, and in turn significantly reduce the probability of misalignment or short circuit, effectively improving the safety of the electrochemical device and improving the cycling stability of the electrochemical device at high temperature and high voltage.

In some embodiments, when the first positive electrode active material layer satisfies F₁/b ≥ 10, a positive electrode with better stability can be obtained, thereby further improving the electrochemical performance of the electrochemical device (for example, thermal safety performance, cycling performance, and direct current internal resistance reduction at high temperature and high voltage). In particular, when F₁ and b simultaneously satisfy F₁ ≥ 200, 2 ≤ b ≤ 20, and F₁/b ≥ 10, the stability of the positive electrode can be further improved.

The second positive electrode active material layer includes a second binder, and the second binder is a water-insoluble fluoropolymer. Optionally the second binder also satisfies at least one of the following conditions:
(1) the second binder includes polyvinylidene fluoride containing an α crystalline form; or
(2) based on a mass of the second positive electrode active material layer, a mass fraction of the second binder is a%, where 0.5 ≤ a ≤ 5.

In some embodiments, when the second positive electrode active material layer satisfies F₂/a ≥ 1, a positive electrode with better stability can be obtained, thereby further improving the electrochemical performance of the electrochemical device (for example, thermal safety performance, cycling performance, and direct current internal resistance reduction at high temperature and high voltage). In particular, when F₂ and a simultaneously satisfy 5 ≤ F₂ ≤ 60, 0.5 ≤ a ≤ 5, and F₂/a ≥ 1, the stability of the positive electrode can be further improved.

In some embodiments, the positive electrode simultaneously satisfies F₁/b ≥ 10 and F₂/a ≥ 1. In this configuration, the positive electrode has better stability, and the obtained electrochemical device also shows better electrochemical performance. In some embodiments, the positive electrode simultaneously satisfies F₁ ≥ 200, 2 ≤ b ≤ 20, F₁/b ≥ 10, 5 ≤ F₂ ≤ 60, 0.5 ≤ a ≤ 5, and F₂/a ≥ 1.

When the first positive electrode active material layer and the second positive electrode active material layer use binders with different solubilities, the obtained electrochemical device shows better thermal safety performance, cycling performance, and impedance reduction at high temperature and high voltage. In particular, using the water-soluble binder in the first positive electrode active material layer and the water-insoluble binder in the second positive electrode active material layer improve the electrochemical performance of the electrochemical device more significantly.

Because the binder cannot implement deintercalation and intercalation of metal ions, excessive addition compromises energy density of the electrochemical device. However, when the percentage of the binder is excessively low, the active material layer cannot be firmly adhered to the positive electrode current collector, thereby increasing the risk of film falling. Therefore, adjusting the percentages of the first binder and the second binder in the first positive electrode active material layer and the second positive electrode active material layer respectively can balance the energy density and other electrochemical performance (for example, safety performance, cycling stability, and impedance reduction) of the electrochemical device. In some embodiments, the mass fractions b% and a% of the first binder and the second binder satisfy 2.5 ≤ a + b ≤ 25 and 1 ≤ b/a ≤ 40. In some embodiments, a and b satisfy 3 ≤ a + b ≤ 20 and 2 ≤ b/a ≤ 30. In some embodiments, a and b satisfy 3.5 ≤ a + b ≤ 15 and 5 ≤ b/a ≤ 20. In some embodiments, a and b satisfy 6 ≤ a + b ≤ 12 and 5 ≤ b/a ≤ 10.

In some embodiments, a satisfies 0.5 ≤ a ≤ 5. In some embodiments, a satisfies 1 ≤ a ≤ 4. In some embodiments, a is 0.8, 1, 1.2, 1.5, 1.8, 2, 2.5, 3, 3.5, 4, 4.5, or 5, or falls within a range defined by any two of these values.

In some embodiments, b satisfies 2 ≤ b ≤ 20. In some embodiments, b satisfies 3 ≤ b ≤ 18. In some embodiments, b is 3, 4, 5, 6, 7, 8, 9, 10, 12, 15, 18, or 20, or falls within a range defined by any two of these values.

Cohesion force and adhesion force tests are performed with reference to the detailed description in the examples of this application.

Adjusting thickness of the first positive electrode active material layer can also further improve the electrochemical performance of the electrochemical device. The thickness mentioned herein is thickness of the positive electrode active material layer in a direction perpendicular to the current collector. In some embodiments, thickness of the first positive electrode active material layer is H₁ µm, and thickness of the positive electrode active material layer is H µm, the positive electrode satisfying H₁/H ≤ 0.1. In some embodiments, the thickness H₁ µm of the first positive electrode active material layer satisfies 0.1 ≤ H₁ ≤ 5. In some embodiments, the thickness H₁ µm of the first positive electrode active material layer satisfies 0.1 ≤ H₁ ≤ 3. In particular, when the water-soluble binder is used in the first positive electrode active material layer, controlling the thickness of the first positive electrode active material layer within the foregoing range can further optimize the performance of the electrochemical device.

The positive electrode active material is not limited to a particular type in this application, provided that it is capable of electrochemically absorbing and releasing metal ions (for example, lithium ions and sodium ions). In addition, the positive electrode active materials applicable to the first positive electrode active material layer and the second positive electrode active material layer in this application may be independently lithium-containing oxides which may be the same or different. A lithium-containing transition metal oxide may be used as the lithium-containing oxide.

In some embodiments, the positive electrode active material containing lithium and at least one transition metal. Examples of the positive electrode active material may include but are not limited to a lithium-containing transition metal oxide and a lithium-containing transition metal phosphate compound.

In some embodiments, a transition metal in the lithium-containing transition metal oxide includes V, Ti, Cr, Mn, Fe, Co, Ni, Cu, or the like. In some embodiments, the lithium-containing transition metal oxide includes lithium cobalt composite oxide such as LiCoO₂, lithium nickel composite oxide such as LiNiO₂, lithium manganese composite oxide such as LiMnO₂, LiMn₂O₄, or Li₂MnO₄, or lithium nickel manganese cobalt composite oxide such as LiNi_{1/3}Mn_{1/3}Co_{1/3}O₂ or LiNi_{0.5}Mn_{0.3}Co_{0.2}O₂, where some of transition metal atoms constituting the main body of these lithium-containing transition metal oxides are replaced with other elements such as Na, K, B, F, Al, Ti, V, Cr, Mn, Fe, Co, Li, Ni, Cu, Zn, Mg, Ga, Zr, Si, Nb, Mo, Sn, or W. Examples of the lithium-containing transition metal oxide may include but are not limited to LiNi_{0.5}Mn_{0.5}O₂, LiNi_{0.85}Co_{0.10}Al_{0.05}O₂, LiNi_{0.33}Co_{0.33}Mn_{0.33}O₂, LiNi_{0.45}Co_{0.10}Al_{0.45}O₂, LiMn_{1.8}Al_{0.2}O₄, and LiMn_{1.5}Ni_{0.5}O₄. Examples of a combination of the lithium-containing transition metal oxides include but are not limited to a combination of LiCoO₂ and LiMn₂O₄, where some of Mn in LiMn₂O₄ may be replaced with a transition metal (for example, LiNi_{0.33}Co_{0.33}Mn_{0.33}O₂), and some of Co in LiCoO₂ may be replaced with a transition metal.

In some embodiments, a transition metal in the lithium-containing transition metal phosphate compound includes V, Ti, Cr, Mn, Fe, Co, Ni, Cu, or the like. In some embodiments, the lithium-containing transition metal phosphate compound includes iron phosphate such as LiFePO₄, Li₃Fe₂(PO₄)₃, or LiFeP₂O₇, or cobalt phosphate such as LiCoPO₄, where some of transition metal atoms constituting the main body of these lithium transition metal phosphate compounds are replaced with other elements such as Al, Ti, V, Cr, Mn, Fe, Co, Li, Ni, Cu, Zn, Mg, Ga, Zr, Nb, or Si.

In some embodiments, the positive electrode active material contains lithium phosphate, which can improve continuous charging performance of the electrochemical device. The use of the lithium phosphate is not limited. In some embodiments, the positive electrode active material and the lithium phosphate are used in a mixed manner. In some embodiments, as compared with a mass of the positive electrode active material and lithium phosphate, a percentage of the lithium phosphate is greater than 0.1%, greater than 0.3%, or greater than 0.5%. In some embodiments, as compared with the mass of the positive electrode active material and lithium phosphate, the percentage of the lithium phosphate is less than 10%, less than 8%, or less than 5%. In some embodiments, the percentage of the lithium phosphate falls within a range defined by any two of these values.

Material with a composition different from that of the positive electrode active material may be attached to a surface of the positive electrode active material. Examples of the surface-attached material may include but are not limited to oxide such as aluminum oxide, silicon dioxide, titanium dioxide, zirconium oxide, magnesium oxide, calcium oxide, boron oxide, antimony oxide, and bismuth oxide; sulfate such as lithium sulfate, sodium sulfate, potassium sulfate, magnesium sulfate, calcium sulfate, and aluminum sulfate; carbonate such as lithium carbonate, calcium carbonate, and magnesium carbonate; carbon, and the like.

These surface-attached materials may be attached to the surface of the positive electrode active material in the following methods: a method for dissolving or suspending the surface-attached material in a solvent to infiltrate into the positive electrode active material, and then performing drying; a method for dissolving or suspending a precursor of the surface-attached material in a solvent to infiltrate into the positive electrode active material, and then performing heating or the like to implement reaction of the surface-attached material; a method for adding the surface-attached material to a precursor of the positive electrode active material while performing sintering; and the like. In the case of attaching carbon, a method of mechanical attachment by using a carbon material (for example, activated carbon) may be used.

In some embodiments, based on a mass of the positive electrode active material layer, a percentage of the surface-attached material is greater than 0.1 ppm, greater than 1 ppm, or greater than 10 ppm. In some embodiments, based on the mass of the positive electrode active material layer, the percentage of the surface-attached material is less than 10%, less than 5%, or less than 2%. In some embodiments, based on the mass of the positive electrode active material layer, the percentage of the surface-attached material falls within a range defined by any two of these values.

Attaching material to the surface of the positive electrode active material can suppress oxidation reaction of the electrolyte on the surface of the positive electrode active material, prolonging service life of the electrochemical device. An excessively small amount of surface-attached material cannot fully exhibit the effects, while an excessively large amount of surface-attached material hinders deintercalation and intercalation of lithium ions, causing an increase in resistance sometimes.

In this application, materials with different compositions attached to the surface of the positive electrode active material are also referred to as "positive electrode active materials"..

In some embodiments, shapes of positive electrode active material particles include but are not limited to block, polyhedron, spherality, ellipsoid, plate, needle, and column. In some embodiments, the positive electrode active material particles include primary particles, secondary particles, or a combination thereof. In some embodiments, the primary particles may agglomerate to form the secondary particles.

In some embodiments, a tap density of the positive electrode active material is greater than 0.5 g/cm³, greater than 0.8 g/cm³, or greater than 1.0 g/cm³. The tap density of the positive electrode active material falling within the foregoing range can suppress amounts of dispersion medium, conductive material, and positive electrode binder required for forming the positive electrode active material layer, thereby guaranteeing filling rate of the positive electrode active material and capacity of the electrochemical device. Composite oxide powder with high tap density being used can form a high-density positive electrode active material layer. Generally, a larger tap density is preferable, and there is no particular upper limit. In some embodiments, the tap density of the positive electrode active material is less than 4.0 g/cm³, less than 3.7 g/cm³, or less than 3.5 g/cm³. The tap density of the positive electrode active material having the foregoing upper limit can suppress a decrease in load characteristics.

The tap density of the positive electrode active material can be calculated in the following manner: placing 5 g to 10 g of positive electrode active material powder into a 10 mL glass measuring cylinder and tapping 200 times at a stroke of 20 mm to obtain a powder filling density (the tap density).

When the positive electrode active material particles are primary particles, a median particle size (D50) of the positive electrode active material particles is a primary particle size of the positive electrode active material particles. When the primary particles of the positive electrode active material particles agglomerate to form secondary particles, a median particle size (D50) of the positive electrode active material particles is a secondary particle size of the positive electrode active material particles.

In some embodiments, the median particle size (D50) of the positive electrode active material particles is greater than 0.3 µm, greater than 0.5 µm, greater than 0.8 µm, or greater than 1.0 µm. In some embodiments, the median particle size (D50) of the positive electrode active material particles is less than 30 µm, less than 27 µm, less than 25 µm, or less than 22 µm. In some embodiments, the median particle size (D50) of the positive electrode active material particles falls within a range defined by any two of these values. When the median particle size (D50) of the positive electrode active material particles falls within the foregoing range, a positive electrode active material with a high tap density can be obtained, suppressing degradation in the performance of the electrochemical device. In addition, problems such as stripes can be prevented during preparation of the positive electrode of the electrochemical device (that is, when the positive electrode active material, the conductive material, the binder, and the like are made into a slurry with a solvent and the slurry is applied in a thin-film form). Herein, more than two positive electrode active materials with different median particle sizes are mixed, further improving the filling property during preparation of the positive electrode.

The median particle size (D50) of the positive electrode active material particles can be measured by using a laser diffraction/scattering particle size distribution tester: when LA-920 manufactured by HORIBA is used as a particle size distribution tester, using a 0.1% sodium hexametaphosphate aqueous solution as a dispersion medium for testing, and measuring a result at an refractive index of 1.24 after ultrasonic dispersion for 5 minutes.

According to at least one aspect, this application further provides a method for preparing the positive electrode. The method includes:
dispersing a first positive electrode active material, a first conductive material, and a first binder in a solvent to prepare a slurry for a first positive electrode active material layer, and dispersing a second positive electrode active material, a second conductive material, and a second binder in a solvent to prepare a slurry for a second positive electrode active material layer; and
applying the slurry for the first positive electrode active material layer onto at least one surface of a positive electrode current collector, and then applying the slurry for the second positive electrode active material layer onto the slurry for the first positive electrode active material layer before or after drying the first positive electrode active material layer.

In the foregoing method, if the slurries for the first and second positive electrode active material layers are applied onto both surfaces of the positive electrode current collector, thickness and load of the first and second positive electrode active material layers applied onto one side of the positive electrode current collector may be the same as or different from those of the first and second positive electrode active material layers applied onto the other side of the positive electrode current collector.

### II. Electrolyte

The electrolyte used in the electrochemical device of this application includes an electrolytic salt and a solvent for dissolving the electrolytic salt. In some embodiments, the electrolyte used in the electrochemical device of this application further includes an additive.

In some embodiments, the electrolyte in this application includes a compound containing a cyano group. The compound containing a cyano group can form a stable protective film on the surface of the positive electrode active material, thereby improving the thermal safety, cycling performance, and impedance reduction of the electrochemical device at high temperature and high voltage.

In some embodiments, the compound containing a cyano group includes but is not limited to at least one of succinonitrile, glutaronitrile, adiponitrile, 1,5-dicyanopentane, 1,6-dicyanohexane, tetramethylsuccinonitrile, 2-methylglutaronitrile, 2,4-dimethylglutaronitrile, 2,2,4,4-tetramethylglutaronitrile, 1,4-dicyanopentane, 1,2-dicyanobenzene, 1,3-dicyanobenzene, 1,4-dicyanobenzene, ethylene glycol bis(propionitrile) ether, 3,5-dioxa-pimelonitrile, 1,4-bis(cyanoethoxy)butane, diethylene glycol bis(2-cyanoethyl) ether, triethylene glycol bis(2-cyanoethyl) ether, tetraethylene glycol bis(2-cyanoethyl) ether, 1,3-bis(2-cyanoethoxy)propane, 1,4-bis(2-cyanoethoxy)butane, 1,5-bis(2-cyanoethoxy)pentane, ethylene glycol bis(4-cyanobutyl) ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane, or 1,2,5-tris(cyanoethoxy)pentane.

These compounds containing a cyano group may be used alone or in any combination. When the electrolyte includes two or more compounds containing a cyano group, a percentage of the compounds containing a cyano group is a total percentage of the two or more compounds containing a cyano group.

The protective effect of the compound containing a cyano group is related to its amount used. In some embodiments, based on a mass of the electrolyte, a percentage of the compound containing a cyano group is x%, where 0.1 ≤ x ≤ 15. In some embodiments, x satisfies 0.5 ≤ x ≤ 10, 1 ≤ x ≤ 8, or 3 ≤ x ≤ 5.In some embodiments, x may be but is not limited to 1, 2, 3, 4, 5, 6, 7, 8, 9, 10, 12, or 15, or falls within a range defined by any two of these values.
active materialIt is particularly important for repairing broken sites of particles that the compound containing a cyano group can form a stable protective film on the surface of the positive electrode active material. It has been further found in this application that controlling the adhesion force F₁ between the current collector and the first positive electrode active material layer and the percentage x% of the compound containing a cyano group to satisfy relations in the following embodiments can further compensate for broken particles caused by the electrochemical device during charge/discharge cycles, thereby further improving the thermal safety performance and cycling performance of the electrochemical device at high temperature and high voltage and reducing the direct current internal resistance of the electrochemical device. In some embodiments, F₁ and x satisfy F₁/x ≥ 13.33. In some embodiments, F₁ and x satisfy F₁/x ≥ 25. In some embodiments, F₁ and x satisfy F₁/x ≥ 33.33. In some embodiments, F₁ and x satisfy F₁/x ≥ 50. In some embodiments, F₁ and x satisfy F₁/x ≥ 100. In particular, in the foregoing embodiments, controlling F₁ to be above 200 N/m can achieve better electrochemical performance.

In some embodiments, the electrolyte further includes any non-aqueous solvent known in the prior art that can be used as a solvent of the electrolyte.

In some embodiments, the non-aqueous solvent includes but is not limited to one or more of cyclic carbonate, linear carbonate, cyclic carboxylate, linear carboxylate, cyclic ether, linear ether, a phosphorus-containing organic solvent, a sulfur-containing organic solvent, or an aromatic fluorine-containing solvent.

In some embodiments, examples of the cyclic carbonate may include but are not limited to one or more of ethylene carbonate (EC), propylene carbonate (PC), and butylene carbonate. In some embodiments, the cyclic carbonate has 3 to 6 carbon atoms.

In some embodiments, the electrolyte includes propylene carbonate. Controlling a percentage of the propylene carbonate in the electrolyte can obtain an electrochemical device with excellent thermal safety performance and cycling performance and low direct current resistance at high temperature and high voltage. In some embodiments, based on a mass of the electrolyte, a percentage of the propylene carbonate is y%, where 2 ≤ y ≤ 25. In some embodiments, y may be but is not limited to 6, 7, 8, 10, 12, 14, 18, 20, 22, or 25, or falls within a range defined by any two of these values.

In addition, it has been found in this application that controlling the relation between the cohesion force F₂ of the second positive electrode active material layer and the percentage y% of the propylene carbonate can further optimize the thermal safety performance, cycling performance, and direct current resistance of the electrochemical device. At high temperature and high voltage, the propylene carbonate easily causes swelling of the positive electrode and may destroy an interface between the positive electrode and the electrolyte, resulting in side reactions. When the cohesion force of the second positive electrode active material layer increases, although the swelling decreases, the side reactions of the electrolyte being oxidized by the positive electrode increase. However, when the cohesion force of the second positive electrode active material layer decreases, although the side reactions weaken, the swelling increases. Therefore, controlling F₂ and y to satisfy a certain relation can better balance the swelling and the side reactions, thereby further improving the performance of the electrochemical device. In some embodiments, F₂ and y satisfy F₂/y ≥ 0.5. In some embodiments, F₂ and y satisfy F₂/y ≥ 1. In some embodiments, F₂ and y satisfy F₂/y ≥ 2. In some embodiments, F₂ and y satisfy F₂/y ≥ 5. In some embodiments, F₂ and y satisfy F₂/y ≥ 6.

In some embodiments, the electrolyte includes propyl propionate. Controlling a percentage of the propyl propionate in the electrolyte can obtain an electrochemical device with excellent thermal safety performance and cycling performance at high temperature and high voltage. In addition, unexpectedly, low-temperature rate performance of the obtained electrochemical device can also be greatly improved. In some embodiments, based on a mass of the electrolyte, a percentage of the propyl propionate is z%, where 5 ≤ z ≤ 50. In some embodiments, z may be but is not limited to 6, 8, 10, 20, 25, 30, 35, or 40, or falls within a range defined by any two of these values.

When the electrolyte includes both the compound containing a cyano group and the propyl propionate, controlling the relation between the percentages of the compound containing a cyano group and propyl propionate in the electrolyte can also obtain an electrochemical device with excellent thermal safety performance and cycling performance and low direct current resistance at high temperature and high voltage. In some embodiments, x and z satisfy 12 ≤ x + z ≤ 65 and 0.5 ≤ z/x ≤ 50.

When the electrolyte includes both the propylene carbonate and the propyl propionate, controlling the relation between the percentages of the propylene carbonate and propyl propionate in the electrolyte can also obtain an electrochemical device with excellent thermal safety performance, cycling performance, and low-temperature rate performance at high temperature and high voltage. In some embodiments, y and z satisfy 15 ≤ y + z ≤ 70 and 1 ≤ z/y ≤ 5.

In some embodiments, the electrolyte further includes at least one of fluoroethylene carbonate, 1,3-propane sultone, vinyl sulfate, vinylene carbonate, or 1-propylphosphoric acid cyclic anhydride. When the compound containing a cyano group, the propylene carbonate, the propyl propionate, the fluoroethylene carbonate, the 1,3-propane sultone, the vinyl sulfate, the vinylene carbonate, and the 1-propylphosphoric acid cyclic anhydride are used in combination, the interface between the electrode and the electrolyte can be further stabilized, thereby improving the thermal safety performance and cycling performance of the electrochemical device at high temperature and high voltage, especially greatly improving high-temperature storage performance.

In some embodiments, the electrolytic salt is not particularly limited, and may be any well-known material that can be used as an electrolytic salt. In the case of a lithium secondary battery, a lithium salt is typically used as the electrolytic salt. Examples of the electrolytic salt may include but are not limited to inorganic lithium salt such as LiPF₆, LiBF₄, LiClO₄, LiAlF₄, LiSbF₆, and LiWF₇; lithium tungstate such as LiWOF₅; lithium carboxylate salt such as HCO₂Li, CH₃CO₂Li, CH₂FCO₂Li, CHF₂CO₂Li, CF₃CO₂Li, CF₃CH₂CO₂Li, CF₃CF₂CO₂Li, CF₃CF₂CF₂CO₂Li, and CF₃CF₂CF₂CF₂CO₂Li; lithium sulfonate salt such as FSO₃Li, CH₃SO₃Li, CH₂FSO₃Li, CHF₂SO₃Li, CF₃SO₃Li, CF₃CF₂SO₃Li, CF₃CF₂CF₂SO₃Li, and CF₃CF₂CF₂CF₂SO₃Li; lithium imide salt such as LiN(FCO)₂, LiN(FCO)(FSO₂), LiN(FSO₂)₂, LiN(FSO₂)(CF₃SO₂), LiN(CF₃SO₂)₂, LiN(C₂F₅SO₂)₂, lithium cyclic 1,2-perfluoroethane disulfonylimide, lithium cyclic 1,3-perfluoropropane disulfonylimide, and LiN(CF₃SO₂)(C₄F₉SO₂); lithium methide salt such as LiC(FSO₂)₃, LiC(CF₃SO₂)₃, and LiC(C₂F₅SO₂)₃; lithium (malonato)borate salt such as lithium bis(malonato)borate salt and lithium difluoro(malonato)borate salt; lithium (malonato)phosphate salt such as lithium tris(malonato)phosphate, lithium difluorobis(malonato)phosphate, and lithium tetrafluoro(malonato)phosphate; fluorine-containing organic lithium salt such as LiPF₄(CF₃)₂, LiPF₄(C₂F₅)₂, LiPF₄(CF₃SO₂)₂, LiPF₄(C₂F₅SO₂)₂, LiBF₃CF₃, LiBF₃C₂F₅, LiBF₃C₃F₇, LiBF₂(CF₃)₂, LiBF₂(C₂F₅)₂, LiBF₂(CF₃SO₂)₂, and LiBF₂(C₂F₅SO₂)₂; lithium oxalatoborate salt such as lithium difluoro(oxalato)borate and lithium bis(oxalato)borate; and lithium oxalatophosphate salt such as lithium tetrafluoro(oxalato)phosphate, lithium difluorobis(oxalato)phosphate, and lithium tris(oxalato)phosphate.

In some embodiments, the electrolytic salt is selected from LiPF₆, LiSbF₆, FSO₃Li, CF₃SO₃Li, LiN(FSO₂)₂, LiN(FSO₂)(CF₃SO₂), LiN(CF₃SO₂)₂, LiN(C₂F₅SO₂)₂, lithium cyclic 1,2-perfluoroethane disulfonylimide, lithium cyclic 1,3-perfluoropropane disulfonylimide, LiC(FSO₂)₃, LiC(CF₃SO₂)₃, LiC(C₂F₅SO₂)₃, LiBF₃CF₃, LiBF₃C₂F₅, LiPF₃(CF₃)₃, LiPF₃(C₂F₅)₃, lithium difluoro(oxalato)borate, lithium bis(oxalato)borate, or lithium difluorobis(oxalato)phosphate. This helps to improve the performance of the electrochemical device such as output power, high-rate charging and discharging, high-temperature storage, and cycling.

A percentage of the electrolytic salt is not particularly limited in this application, provided that the effects of this application are not impaired. In some embodiments, a total molar concentration of lithium in the electrolyte is above 0.3 mol/L, above 0.4 mol/L, or above 0.5 mol/L. In some embodiments, the total molar concentration of lithium in the electrolyte is below 3.0 mol/L, below 2.5 mol/L, or below 2.0 mol/L. In some embodiments, the total molar concentration of lithium in the electrolyte falls within a range defined by any two of these values. When the concentration of the electrolytic salt falls within the foregoing range, the amount of lithium as charged particles is not excessively small, and the viscosity can be controlled within an appropriate range, so as to ensure good conductivity.

When two or more electrolytic salts are used, the electrolytic salts include at least one salt selected from a group consisting of monofluorophosphate, borate, oxalate, and fluorosulfonate. In some embodiments, the electrolytic salt includes a salt selected from a group consisting of monofluorophosphate, oxalate, and fluorosulfonate. In some embodiments, the electrolytic salt includes a lithium salt. In some embodiments, based on a mass of the electrolytic salt, a percentage of the salt selected from the group consisting of monofluorophosphate, borate, oxalate, and fluorosulfonate is greater than 0.01% or greater than 0.1%. In some embodiments, based on the mass of the electrolytic salt, the percentage of the salt selected from the group consisting of monofluorophosphate, borate, oxalate, and fluorosulfonate is less than 20% or less than 10%. In some embodiments, the percentage of the salt selected from the group consisting of monofluorophosphate, borate, oxalate, and fluorosulfonate falls within a range defined by any two of these values.

In some embodiments, the electrolytic salt includes more than one salt selected from the group consisting of monofluorophosphate, borate, oxalate, and fluorosulfonate, and more than one other salt. Examples of the other salt may include the lithium salts exemplified above, and in some embodiments, are LiPF₆, LiN(FSO₂)(CF₃SO₂), LiN(CF₃SO₂)₂, LiN(C₂F₅SO₂)₂, lithium cyclic 1,2-perfluoroethane disulfonylimide, lithium cyclic 1,3-perfluoropropane disulfonylimide, LiC(FSO₂)₃, LiC(CF₃SO₂)₃, LiC(C₂F₅SO₂)₃, LiBF₃CF₃, LiBF₃C₂F₅, LiPF₃(CF₃)₃, and LiPF₃(C₂F₅)₃. In some embodiments, the other salt than the more than one material is LiPF₆.

In some embodiments, based on a mass of the electrolytic salt, a percentage of the other salt than the more than one material is greater than 0.01% or greater than 0.1%. In some embodiments, based on the mass of the electrolytic salt, the percentage of the other salt than the more than one material is less than 20%, less than 15%, or less than 10%. In some embodiments, the percentage of the other salt than the more than one material falls within a range defined by any two of these values. The other salt than the more than one material with the foregoing percentage helps to balance the conductivity and viscosity of the electrolyte.

### III. Negative electrode

The negative electrode includes a negative electrode current collector and a negative electrode active material layer disposed on at least one surface of the negative electrode current collector, and the negative electrode active material layer includes a negative electrode active material. One or more negative electrode active material layers may be provided, and the negative electrode active material layers may contain the same or different negative electrode active materials. The negative electrode active material is any material capable of reversibly intercalating and deintercalating metal ions such as lithium ions and sodium ions. In some embodiments, a charge capacity of the negative electrode active material is larger than a discharge capacity of the positive electrode active material, so as to prevent lithium metal from unexpectedly precipitating onto the negative electrode during charging.

In some embodiments, the negative electrode current collector may be a negative electrode current collector commonly used in the art, and includes but is not limited to a metal material such as aluminum, copper, nickel, stainless steel, or nickel-plated steel.

In a case that the negative electrode current collector is a metal material, the negative electrode current collector may take forms including but not limited to a metal foil, a metal cylinder, a metal coil, a metal plate, a metal film, a sheet metal mesh, a punched metal, and a foamed metal. In some embodiments, the negative electrode current collector is a metal film. In some embodiments, the negative electrode current collector is a copper foil. In some embodiments, the negative electrode current collector is a rolled copper foil based on a rolling method or an electrolytic copper foil based on an electrolytic method.

In some embodiments, thickness of the negative electrode current collector is greater than 1 µm or greater than 5 µm. In some embodiments, the thickness of the negative electrode current collector is less than 100 µm or less than 50 µm. In some embodiments, the thickness of the negative electrode current collector falls within a range defined by any two of these values.

The negative electrode active material is not particularly limited, provided that it can reversibly absorb and release lithium ions or sodium ions. Examples of the negative electrode active material may include but are not limited to carbon material such as natural graphite and artificial graphite; metal such as silicon (Si) and tin (Sn); and oxide of metal elements such as Si and Sn. These negative electrode active materials may be used alone or in combination.

The negative electrode active material layer further includes a negative electrode binder. The negative electrode binder can improve bonding between negative electrode active material particles and bonding between the negative electrode active material and the current collector. The negative electrode binder is not limited to a particular type, provided that its material is stable to the electrolyte or a solvent used during preparation of the electrode. In some embodiments, the negative electrode binder includes a resin binder. Examples of the resin binder include but are not limited to fluororesin, polyacrylonitrile (PAN), polyimide resin, acrylic resin, and polyolefin resin. When an aqueous solvent is used for preparing a negative electrode mixture slurry, the negative electrode binder includes but is not limited to carboxymethyl cellulose (CMC) or its salt, styrene-butadiene rubber (SBR), polyacrylic acid (PAA) or its salt, or polyvinyl alcohol.

### IV. Electrochemical device

According to at least one aspect, this application provides an electrochemical device, including a positive electrode, a negative electrode, an electrolyte, and a separator located between the positive electrode and the negative electrode. In some embodiments, the positive electrode includes the positive electrode described in the foregoing embodiments of this application. In some embodiments, the electrolyte includes the electrolyte described in the foregoing embodiments of this application.

The separator is not limited to any particular material or shape in this application, provided that the effects of this application are not significantly impaired. The separator may be a resin, glass fiber, inorganic material, or the like that is formed of materials stable to the electrolyte of this application. In some embodiments, the separator includes a porous sheet or non-woven fabric-like material having excellent electrolyte retention, or the like. Examples of the material of the resin or glass fiber separator may include but are not limited to polyolefin, aromatic polyamide, polytetrafluoroethylene, and polyethersulfone. In some embodiments, the polyolefin is polyethylene or polypropylene. In some embodiments, the polyolefin is polypropylene. These materials of the separator may be used alone or in any combination.

The separator may alternatively be formed by stacking the foregoing materials, and examples thereof include but are not limited to a three-layer separator formed by stacking polypropylene, polyethylene, and polypropylene in order.

Examples of the material of the inorganic material may include but are not limited to oxide such as aluminum oxide and silicon dioxide, nitride such as aluminum nitride and silicon nitride, and sulfate (for example, barium sulfate and calcium sulfate). The form of the inorganic material may include but is not limited to a granular or fibrous form.

The form of the separator may be a thin-film form, and examples thereof include but are not limited to a non-woven fabric, a woven fabric, and a microporous film. In the thin-film form, the separator has a pore size of 0.01 µm to 1 µm and a thickness of 5 µm to 50 µm. In addition to the standalone thin-film-like separator, the following separator may alternatively be used: a separator that is obtained by using a resin-based binder to form a composite porous layer containing inorganic particles on the surface of the positive electrode and/or the negative electrode, for example, a separator that is obtained by using fluororesin as a binder to form a porous layer on two surfaces of the positive electrode with aluminum oxide particles of which 90% have a particle size less than 1 µm.

The thickness of the separator is random. In some embodiments, the thickness of the separator is greater than 1 µm, greater than 5 µm, or greater than 8 µm. In some embodiments, the thickness of the separator is less than 50 µm, less than 40 µm, or less than 30 µm. In some embodiments, the thickness of the separator falls within a range defined by any two of these values. The thickness of the separator falling within the foregoing range can guarantee insulation performance and mechanical strength, and can guarantee the rate performance and energy density of the electrochemical device.

When a porous material such as a porous sheet or a non-woven fabric is used as the separator, porosity of the separator is random. In some embodiments, the porosity of the separator is greater than 10%, greater than 15%, or greater than 20%. In some embodiments, the porosity of the separator is less than 60%, less than 50%, or less than 45%. In some embodiments, the porosity of the separator falls within a range defined by any two of these values. The porosity of the separator falling within the foregoing range can guarantee insulation performance and mechanical strength, and can suppress sheet resistance, allowing the electrochemical device to have good safety performance.

An average pore size of the separator is also random. In some embodiments, the average pore size of the separator is less than 0.5 µm or less than 0.2 µm. In some embodiments, the average pore size of the separator is greater than 0.05 µm. In some embodiments, the average pore size of the separator falls within a range defined by any two of these values. If the average pore size of the separator exceeds the foregoing range, a short circuit is likely to occur. When the average pore size of the separator falls within the foregoing range, the electrochemical device has good safety performance.

### V. Application

The electrochemical device of this application includes any device in which electrochemical reactions take place. Specific examples of the device include all types of primary batteries, secondary batteries, fuel batteries, solar batteries, or capacitors. Especially, the electrochemical device is a lithium secondary battery, including a lithium metal secondary battery or a lithium-ion secondary battery.

This application further provides an electronic device, including the electrochemical device according to this application.

The electrochemical device of this application is not particularly limited to any purpose, and may be used in any known electronic device in the prior art. In some embodiments, the electrochemical device of this application may be used without limitation in a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

The following describes preparation of lithium-ion battery by using a lithium-ion battery as an example and with reference to specific examples. Persons skilled in the art understand that the preparation method described in this application is only an example, and that all other suitable preparation methods fall within the scope of this application.

### Examples

### I. Preparation of lithium-ion battery

(1) Preparation of negative electrode: Artificial graphite, styrene-butadiene rubber, and sodium carboxymethyl cellulose were mixed at a mass ratio of 96%:2%:2% in deionized water, and the mixture was stirred to produce a uniform slurry. The slurry was applied onto a 9 µm copper foil, followed by drying, cold pressing, cutting, and tab welding, to obtain a negative electrode.
(2) Preparation of positive electrode: Lithium iron phosphate, conductive carbon black Super-P, and a first binder were mixed at a mass ratio of 96.5%:1%:b% in deionized water, and the mixture was stirred to produce a uniform first positive electrode active material layer slurry; and lithium cobalt oxide, conductive carbon black Super-P, and a second binder were mixed at a mass ratio of 97.5%:1%:a% in N-methylpyrrolidone (NMP), and the mixture was stirred to produce a uniform second positive electrode active material layer slurry. The first positive electrode active material layer slurry was applied onto the front and back sides of a positive electrode current collector made of aluminum foil, with a thickness of 5 µm; and then the second positive electrode active material layer slurry was applied onto the positive electrode current collector, with a thickness of 50 µm, such that a total coating thickness on one surface was 55 µm. Then drying, cold pressing, cutting, and tab welding were performed to obtain a positive electrode.
(3) Preparation of electrolyte: In a dry argon environment, EC and DEC were mixed at a mass ratio of 1:1, and LiPF₆ was added. The mixture was evenly mixed to form a base electrolyte, where a concentration of the LiPF₆ was 1.15 mol/L. Additives of different percentages were added to the base electrolyte, to obtain electrolytes in the examples and comparative examples in this application.

Abbreviations and full names of components in the electrolyte are listed in the following table.

| Material | Abbreviation | Material | Abbreviation |
|---|---|---|---|
| Ethylene carbonate | EC | Propylene carbonate | PC |
| Diethyl carbonate | DEC | Propyl propionate | PP |
| Succinonitrile | SN | Adiponitrile | ADN |
| Ethylene glycol bis(2-cyanoethyl) ether | EDN | 1,3,6-hexanetricarbonitrile | HTCN |
| 1,2,3-tris(2-cyanoethoxy) propane | TCEP | Fluoroethylene carbonate | FEC |
| 1,3-propane sultone | PS | Vinyl sulfate | DTD |
| Vinylene carbonate | VC | 1-propylphosphoric acid cyclic anhydride | T3P |

(4) Preparation of separator: An 8 µm polyethylene film was used as a separator.

(5) Preparation of lithium-ion battery: The obtained positive electrode, separator, and negative electrode were stacked in sequence and wound, and then placed in an outer package foil, with an electrolyte injection opening left. The electrolyte was injected from the electrolyte injection opening which was then sealed, followed by processes such as formation and capacity, to obtain a lithium-ion battery.

### (II) Test methods of positive electrode and lithium-ion battery

(1) Cohesion force test: Electrode plates disassembled from the battery were taken, from which a single-sided coated electrode plate was selected (or a double-sided coated electrode plate was made into a single-sided electrode plate with a scraper), and the electrode plate was cut into a sample under test with a length 100 mm and a width of 10 mm. A 25 mm wide stainless steel plate was taken, a 3M double-sided adhesive (with a width of 11 mm) was applied onto the stainless steel plate, and the sample under test was attached to the 3M double-sided adhesive on the stainless steel plate, where the current collector was adhered to the double-sided adhesive. A 2000 g roller was used to roll back and forth on the surface of the sample for three times (300 mm/min). Then, an adhesive tape with a width of 10 mm and a thickness of 50 µm (model: NITTO.NO5000NS) was attached to the surface of the active material layer, and the 2000 g roller was used to roll back and forth on the surface of the adhesive tape for three times (300 mm/min). The adhesive tape was bent at 180 degrees, and the adhesive tape was manually peeled off the active material layer by 25 mm. The sample was fixed on an Instron 336 tensile testing machine, with a peeling surface aligned with a force line of the testing machine (that is, peeling was performed at 180°). Continuous peeling was performed at 300 mm/min to obtain a cohesion force curve, and an average value of a stable section was taken as a peeling force F₀. In this case, the cohesion force of the electrode plate under test was: F₂ = F₀/width of sample under test, where F₂ was measured in N/m.
(2) Adhesion force test: An electrode plate disassembled from the battery was taken and cut into a 20 mm × 10 cm test sample strip, and the strip was attached to a clean stainless steel plate with a double-sided adhesive with a width of 20 mm (model: NITTO.NO5000NS). The tensile testing machine was used to perform a 180° peeling test on the strip, where a tensile speed of the tensile testing machine was 50 mm/min. An average value of peeling forces collected when the first positive electrode active material layer was entirely peeled off the positive electrode current collector was an adhesion force F between the positive electrode current collector and the first positive electrode active material layer. The adhesion force of the electrode plate under test was: F₁ = F/width of sample under test, where F₁ was measured in N/m.
(3) Thermal safety temperature rise test
   At 25°C, the lithium-ion battery was left standing for 30 minutes, and a thickness T₁ was measured. Then the temperature was increased to 130°C at a temperature rise velocity of 5°C/min, the battery was maintained at that temperature for 30 minutes, and then a thickness T₂ at that point was measured. Thickness swelling rate of the lithium-ion battery was calculated according to the following formula:$Thickness swelling rate at temperature rise = \left({T}_{2}-{T}_{1}\right) / T 1 \times 100 % .$
(4) Direct current internal resistance test at high temperature and high voltage

At 65°C, the lithium-ion battery was charged to 4.7 V at a constant current of 1.5C, then charged to 0.05C at a constant voltage of 4.7 V, and left standing for 30 minutes. The battery was discharged at 0.1C for 10 seconds, and a voltage value was recorded as U₁. The battery was discharged at 1C for 360 seconds, and a voltage value was recorded as U₂. Such charging and discharging steps were repeated for 5 times. "1C" refers to a current value at which a lithium-ion battery is fully discharged in one hour. $Direct current resistance R = \left({U}_{2}-{U}_{1}\right) / \left(1C-0.1C\right) .$

### (5) Capacity retention rate test at high temperature and high voltage

At 45°C, the lithium-ion battery was charged to 4.7 V at a constant current of 1C, then charged to a current of 0.05C at a constant voltage, and discharged to 3.0 V at a constant current of 1C. This was the first cycle, and a discharge capacity C₁ after the first cycle was recorded. 800 charge/discharge cycles were performed on the lithium-ion battery according to the foregoing conditions, and a discharge capacity C₈₀₀ after 800 cycles was recorded. The capacity retention rate after cycles was calculated according to the following formula: $Capacity retention rate = \left({C}_{800}/{C}_{1}\right) \times 100 % .$

### (6) Low-temperature rate performance test

At 25°C, the lithium-ion battery was charged to 4.7 V at a constant current of 0.5C, then charged to 0.05C at a constant voltage, and discharged to 3.0 V at a constant current of 0.5C. A discharge capacity at 25°C was recorded as C(25°C). At 25°C, the lithium-ion battery was charged to 4.7 V at a constant current of 0.5C, then charged to 0.05C at a constant voltage, placed in a -20°C thermostat, left standing for 2 hours, and discharged to 3.0 V at a constant current of 0.5C. A discharge capacity at -20°C was recorded as C(-20°C). The capacity retention rate of the lithium-ion battery at low temperature compared with room temperature was calculated according to the following formula: $Capacity retention rate = \left[C\left(-20°C\right)/C\left(25°C\right)\right] \times 100 % .$

### (7) High-temperature storage performance test

At 25°C, the lithium-ion battery was left standing for 30 minutes, then charged to 4.7 V at a constant current of 0.5C, charged to 0.05C at a constant voltage of 4.7 V, and left standing for 5 minutes. A battery thickness was measured and recorded as T₃. After storage at 60°C for 21 days, a battery thickness was measured and recorded as T₄. The thickness swelling rate of the lithium-ion battery after high-temperature storage was calculated according to the following formula: 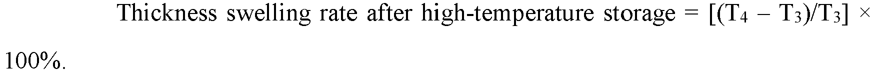 Thickness swelling rate after high-temperature storage = [(T4 - T3)/T3] × 100%.

### III. Test results

The difference between the lithium-ion batteries prepared in Examples 1-1 to 1-8 and Comparative Examples 1-1 to 1-4 according to the foregoing preparation method lies in the percentage of the binder, where the first binder is water-soluble polyacrylate and the second binder is oil-soluble PVDF. Table 1 shows influences of the adhesion force F₁ between the positive electrode current collector and the first positive electrode active material layer and the cohesion force F₂ of the second positive electrode active material layer on the thermal safety performance, direct current internal resistance, and cycling performance of the lithium-ion battery at high temperature and high voltage.

**Table 1**

| | b | a | F₁ | F₂ | F₁/F₂ | Thickness swelling rate at temperature rise (%) | DCR (mΩ) | Capacity retention rate (%) |
|---|---|---|---|---|---|---|---|---|
| Example 1-1 | 2.5 | 1.5 | 200 | 5 | 40 | 20.2 | 84.5 | 78.9 |
| Example 1-2 | 2.8 | 1.2 | 220 | 20 | 11 | 18.5 | 81.8 | 79.1 |
| Example 1-3 | 3.0 | 1.3 | 250 | 30 | 8.3 | 17.9 | 81.2 | 81.2 |
| Example 1-4 | 3.5 | 1.4 | 300 | 40 | 7.5 | 15.6 | 80.3 | 82.5 |
| Example 1-5 | 3.5 | 1.5 | 300 | 50 | 6 | 15.5 | 79.3 | 83.4 |
| Example 1-6 | 4.0 | 1.5 | 350 | 50 | 7 | 12.1 | 78.7 | 85.1 |
| Example 1-7 | 4.5 | 1.5 | 400 | 50 | 8 | 11.5 | 74.5 | 85.9 |
| Example 1-8 | 5.5 | 1.5 | 500 | 50 | 10 | 10.1 | 73.1 | 86.2 |
| Comparative Example 1-1 | 2.5 | 1.4 | 200 | 40 | 5 | 25.7 | 169.4 | 61.6 |
| Comparative Example 1-2 | 2 | 1.3 | 150 | 30 | 5 | 35 | 235.1 | 57.9 |
| Comparative Example 1-3 | 2.5 | 3.5 | 200 | 100 | 2 | 50 | 272.9 | 49.3 |
| Comparative Example 1-4 | 2 | 1.5 | 150 | 50 | 3 | 37 | 245.8 | 51.8 |

It can be learned from the electrochemical test results in Table 1 that as compared with Comparative Examples 1-1 to 1-4, in Examples 1-1 to 1-8 of this application, the positive electrode satisfies F₁/F₂ ≥ 6, and the obtained corresponding electrochemical device has lower thickness swelling at high temperature and has lower direct current resistance and higher capacity retention rate during charging and discharging at high temperature and high voltage. In addition, it can be learned from the data of Examples 1-5 to 1-8 that as the adhesion force F₁ between the positive electrode current collector and the first positive electrode active material layer increases, the obtained corresponding electrochemical device has lower risk of internal short circuit and higher thermal safety performance at high temperature and high voltage or in the case of misuse.

Table 2 shows influences of the first binder and the second binder on the thermal safety performance, direct current internal resistance, and cycling performance of the lithium-ion battery at high temperature and high voltage, where the difference between Examples 2-1 to 2-14 and Example 1-1 lies only in the parameters listed in Table 2.

**Table 2**

| | Percentage of second binder (a) | First binder (b) | a+b | b/a | Thickness swelling rate at temperature rise (%) | DCR (mΩ) | Capacity retention rate (%) |
|---|---|---|---|---|---|---|---|
| Example 1-1 | Oil-soluble PVDF (1.5%) | Water-soluble polyacrylate (2.5%) | 4 | 1.67 | 20.2 | 84.5 | 78.9 |
| Example 2-1 | Oil-soluble PVDF (1%) | Water-soluble polyacrylate containing a cyano group (5%) | 6 | 5 | 15.1 | 72.9 | 84.1 |
| Example 2-2 | Oil-soluble PVDF (1%) | Water-soluble polyacrylate containing amide (6%) | 7 | 6 | 13.2 | 68.3 | 85.2 |
| Example 2-3 | Oil-soluble PVDF (1%) | Water-soluble polyacrylate (8%) | 9 | 8 | 12.5 | 61.2 | 86.3 |
| Example 2-4 | Oil-soluble polyvinylidene fluoride containing an α crystalline form (1%) | Water-soluble polyacrylate (8%) | 11 | 10 | 10.2 | 52.9 | 89.3 |
| Example 2-5 | Oil-soluble PVDF (1.5%) | Water-soluble polyacrylate containing a cyano group (7.5%) | 9 | 5 | 9.6 | 48.5 | 89.9 |
| Example 2-6 | Oil-soluble PVDF (3%) | Water-soluble polyacrylate containing a cyano group (9%) | 12 | 3 | 9.4 | 46.8 | 90.2 |
| Example 2-7 | Oil-soluble PVDF (5%) | Water-soluble polyacrylate containing a cyano group (15%) | 20 | 3 | 8.9 | 45.2 | 90.6 |
| Example 2-8 | Oil-soluble polyvinylidene fluoride containing an α crystalline form (1%) | Oil-soluble PVDF (10%) | 11 | 10 | 18.1 | 92.8 | 77.2 |
| Example 2-9 | Oil-soluble PVDF (1%) | Water-soluble polyacrylate (10%) | 11 | 10 | 8.6 | 33.5 | 87.9 |
| Example 2-10 | Oil-soluble PVDF (1%) | Oil-soluble PVDF (10%) | 11 | 10 | 19.7 | 99.9 | 75.3 |
| Example 2-11 | Oil-soluble polyvinylidene fluoride containing an α crystalline form (1%) | Water-soluble PVDF (10%) | 11 | 10 | 7.9 | 31.3 | 88.9 |
| Example 2-12 | Oil-soluble PVDF (1%) | Oil-soluble polyacrylate (10%) | 11 | 10 | 21.3 | 96.2 | 78.5 |
| Example 2-13 | Oil-soluble PVDF (1%) | Water-soluble polyacrylate (1%) | 2 | 1 | 22.9 | 97.9 | 76.5 |
| Example 2-14 | Oil-soluble PVDF (1%) | Water-soluble polyacrylate (25%) | 26 | 25 | 23.7 | 125.9 | 72.8 |

It can be learned from the comparison of the data of Examples 2-9 and 2-12 in Table 2 that when the water-soluble binder is used in the first positive electrode active material layer, the obtained corresponding electrochemical device has better electrochemical performance. The comparison between Example 2-8 and Example 2-11 leads to a same conclusion. A possible reason is that hydrogen bonding or other intermolecular forces between the water-soluble binder and the polar functional groups such as hydroxyl groups on the surface of the positive electrode current collector aluminum foil increase the adhesion force. In addition, it can be learned from the comparison between Examples 2-13 and 2-14 and Example 2-9 that in a case that the same binders are used, when the percentages of the first binder and the second binder satisfy 2.5 ≤ a + b ≤ 25 and 1 ≤ b/a ≤ 40, the positive electrode has a more stable structure, further improving the performance of the electrochemical device. In addition, it can be learned from the data of Examples 1-1 and 2-1 to 2-12 that when other binders are used and the percentages thereof satisfy 2.5 ≤ a + b ≤ 25 and 1 ≤ b/a ≤ 40, a more stable positive electrode can also be obtained.

Table 3 shows influences of F₁/b and F₂/a on the thermal safety performance, direct current internal resistance, and cycling performance of the electrochemical device at high temperature and high voltage, where the difference between Examples 3-1 to 3-6 and Example 1-1 lies only in the parameters listed in Table 3.

**Table 3**

| | F₁/b | F₂/a | Thickness swelling rate at temperature rise (%) | DCR (mΩ) | Capacity retention rate (%) |
|---|---|---|---|---|---|
| Example 1-1 | 80 | 5 | 20.2 | 84.5 | 78.9 |
| Example 3-1 | 100 | 10 | 18.3 | 81.3 | 79.5 |
| Example 3-2 | 150 | 50 | 15.8 | 77.4 | 85.9 |
| Example 3-3 | 200 | 80 | 14.2 | 67.9 | 86.3 |
| Example 3-4 | 8 | 4 | 21.1 | 89.3 | 75.4 |
| Example 3-5 | 12 | 0.5 | 22.9 | 96.1 | 76.8 |
| Example 3-6 | 8 | 0.5 | 22.1 | 94.8 | 77.1 |

It can be learned from the electrochemical test results in Table 3 that when the positive electrode further satisfies F₁/b ≥ 10 and F₂/a ≥ 1, the obtained corresponding electrochemical device has lower thickness swelling, lower direct current internal resistance, and higher capacity retention rate at high temperature and high voltage.

Table 4 shows influences of the total thickness H of the positive electrode active material layer and the thickness H₁ of the first positive electrode active material layer on the thermal safety performance, direct current internal resistance, and cycling performance of the electrochemical device at high temperature and high voltage, where the difference between Examples 4-1 to 4-5 and Example 1-1 lies only in the parameters listed in Table 4.

**Table 4**

| | H₁ (µm) | H (µm) | H₁/H | Thickness swelling rate at temperature rise (%) | DCR (mΩ) | Capacity retention rate (%) |
|---|---|---|---|---|---|---|
| Example 1-1 | 5 | 50 | 0.1 | 20.2 | 84.5 | 78.9 |
| Example 4-1 | 4 | 50 | 0.08 | 18.5 | 76.9 | 84.6 |
| Example 4-2 | 3 | 50 | 0.06 | 15.8 | 64.2 | 86.1 |
| Example 4-3 | 5 | 30 | 0.16 | 20.9 | 92.6 | 76.9 |
| Example 4-4 | 1 | 30 | 0.03 | 19.4 | 89.6 | 78.2 |
| Example 4-5 | 0.1 | 30 | 0.003 | 18.9 | 87.5 | 79.9 |

It can be learned from the electrochemical test results in Table 4 that when the positive electrode further satisfies H₁/H ≤ 0.1, the obtained corresponding electrochemical device has lower thickness swelling, lower direct current internal resistance, and higher capacity retention rate at high temperature and high voltage.

Table 5 shows influences of the compound containing a cyano group included in the electrolyte on the thermal safety performance, direct current internal resistance, and cycling performance of the electrochemical device at high temperature and high voltage, where the difference between Examples 5-1 to 5-25 and Example 1-1 lies only in the parameters listed in Table 5.

**Table 5**

| | Compound containing cyano group (x) | F₁/x | Thickness swelling rate at temperature rise (%) | DCR (mΩ) | Capacity retention rate (%) |
|---|---|---|---|---|---|
| Example 1-1 | 0 | 0 | 20.2 | 84.5 | 78.9 |
| Example 5-1 | SN(4) | 50 | 12.1 | 78.3 | 86.2 |
| Example 5-2 | ADN(4) | 50 | 12.4 | 78.9 | 89.7 |
| Example 5-3 | EDN(2) | 100 | 10.9 | 77.9 | 90.5 |
| Example 5-4 | HTCN(2) | 100 | 11.1 | 76.4 | 91.2 |
| Example 5-5 | TCEP(2) | 100 | 10.3 | 71.9 | 90.5 |
| Example 5-6 | SN(4) + ADN(2) | 33.33 | 10.1 | 68.2 | 91.3 |
| Example 5-7 | SN(4) + HTCN(2) | 33.33 | 9.5 | 67.3 | 91.5 |
| Example 5-8 | ADN(4) + EDN(2) | 33.33 | 9.6 | 65.2 | 92.9 |
| Example 5-9 | ADN(4) + HTCN(2) | 33.33 | 8.3 | 62.1 | 93.1 |
| Example 5-10 | ADN(4) + TCEP(2) | 33.33 | 8.2 | 60.5 | 93.4 |
| Example 5-11 | SN(4) + ADN(2) + HTCN(2) | 25 | 8.1 | 58.2 | 93.5 |
| Example 5-12 | SN(4) + ADN(2) + TCEP(2) | 25 | 7.7 | 57.1 | 93.9 |
| Example 5-13 | SN(4) + HTCN(2) + TCEP(2) | 25 | 6.9 | 54.2 | 94.1 |
| Example 5-14 | ADN(4) + HTCN(2) + TCEP(2) | 25 | 7.2 | 50.1 | 94.5 |
| Example 5-15 | ADN(4) + HTCN(2) + FEC(3) | 33.33 | 7.5 | 55.7 | 91.3 |
| Example 5-16 | ADN(4) + HTCN(2) + PS(1) | 33.33 | 6.9 | 53.3 | 91.2 |
| Example 5-17 | ADN(4) + HTCN(2) + DTD(0.5) | 33.33 | 7.2 | 54.2 | 92.3 |
| Example 5-18 | ADN(4) + HTCN(2) + T3P(0.5) | 33.33 | 5.8 | 47.2 | 95.2 |
| Example 5-19 | ADN(4) + HTCN(2) + VC(0.5) | 33.33 | 6.7 | 51.8 | 92.1 |
| Example 5-20 | ADN(4) + HTCN(2) + PP(20) | 33.33 | 6.3 | 51.2 | 92.3 |
| Example 5-21 | ADN(4) + HTCN(2) + PC(15) | 33.33 | 8.4 | 62.9 | 90.7 |
| Example 5-22 | ADN(4) + HTCN(2) + PC(5) | 33.33 | 8.9 | 61.3 | 91.3 |
| Example 5-23 | ADN(7) + SN(8) | 13.33 | 14.8 | 63.5 | 82.4 |
| Example 5-24 | ADN(7) + SN(10) | 11.76 | 18.3 | 67.8 | 81.7 |
| Example 5-25 | ADN(8) + SN(12) | 10 | 19.2 | 68.2 | 81.1 |

It can be learned from the electrochemical test results in Table 5 that when the compound containing a cyano group is added to the electrolyte, the thermal safety, cycling performance, and impedance reduction of the electrochemical device at high temperature and high voltage can be further improved. Especially, when F₁ and x satisfy F₁/x ≥ 13.33, the electrochemical performance of the electrochemical device is improved more significantly.

Table 6 shows influences of the propylene carbonate in the electrolyte on the thermal safety performance, direct current internal resistance, and cycling performance of the electrochemical device at high temperature and high voltage, where the difference between Examples 6-1 to 6-8 and Example 1-1 lies only in the parameters listed in Table 6.

**Table 6**

| | PC (y) | F₂ | F₂/y | Thickness swelling rate at temperature rise (%) | DCR (mΩ) | Capacity retention rate (%) |
|---|---|---|---|---|---|---|
| Example 1-1 | 0 | 5 | - | 20.2 | 84.5 | 78.9 |
| Example 6-1 | 10 | 10 | 1 | 18.3 | 58.9 | 79.5 |
| Example 6-2 | 10 | 20 | 2 | 15.1 | 56.5 | 80.3 |
| Example 6-3 | 10 | 50 | 5 | 14.8 | 45.3 | 81.6 |
| Example 6-4 | 10 | 60 | 6 | 13.2 | 44.1 | 82.5 |
| Example 6-5 | 20 | 50 | 2.5 | 14.7 | 42.9 | 83.8 |
| Example 6-6 | 25 | 50 | 2 | 15.1 | 43.6 | 82.9 |
| Example 6-7 | 25 | 5 | 0.2 | 18.7 | 75.5 | 79.3 |
| Example 6-8 | 35 | 10 | 0.29 | 18.8 | 72.1 | 79.1 |

It can be learned from the electrochemical test results in Table 6 that when the propylene carbonate is added to the electrolyte, especially when F₂ and y further satisfy F₂/y ≥ 0.5, the obtained corresponding electrochemical device shows not only excellent thermal safety performance and cycling performance but also unexpectedly greatly reduced direct current resistance at high temperature and high voltage.

Table 7 shows influences of the percentages of the compound containing a cyano group and the propyl propionate on the thermal safety performance, direct current internal resistance, and cycling performance of the electrochemical device at high temperature and high voltage, where the difference between Examples 7-1 to 7-16 and Example 1-1 lies only in the parameters listed in Table 7.

**Table 7**

| | x | z | x + z | z/x | Thickness swelling rate at temperature rise (%) | DCR (mΩ) | Capacity retention rate (%) |
|---|---|---|---|---|---|---|---|
| Example 1-1 | 0 | 0 | 0 | - | 20.2 | 84.5 | 78.9 |
| Example 7-1 | SN(4) | 15 | 19 | 3.75 | 11.5 | 77.5 | 90.1 |
| Example 7-2 | ADN(4) | 15 | 19 | 3.75 | 11.2 | 77.1 | 91.5 |
| Example 7-3 | EDN(2) | 20 | 22 | 10 | 10.4 | 76.2 | 91.8 |
| Example 7-4 | HTCN(2) | 20 | 22 | 10 | 10.2 | 75.4 | 92.3 |
| Example 7-5 | TCEP(2) | 25 | 27 | 12.5 | 10.1 | 70.6 | 92.8 |
| Example 7-6 | SN(4) + ADN(2) | 25 | 31 | 12.5 | 9.5 | 67.3 | 93.5 |
| Example 7-7 | SN(4) + HTCN(2) | 25 | 31 | 12.5 | 9.1 | 66.1 | 94.1 |
| Example 7-8 | ADN(4) + EDN(2) | 25 | 31 | 12.5 | 8.2 | 56.2 | 95.3 |
| Example 7-9 | ADN(4) + HTCN(2) + TCEP(2) | 25 | 33 | 3.1 | 7.9 | 53.2 | 95.8 |
| Example 7-10 | SN(4) + HTCN(2) | 50 | 56 | 8.3 | 9.2 | 67.2 | 85.2 |
| Example 7-11 | ADN(4) + EDN(2) | 60 | 66 | 10 | 18.5 | 95.1 | 77.6 |
| Example 7-12 | ADN(2) | 60 | 62 | 30 | 18.2 | 89.3 | 79.1 |
| Example 7-13 | ADN(0.5) | 17.5 | 18 | 35 | 13.2 | 78.1 | 84.3 |
| Example 7-14 | ADN(0.5) | 25 | 25.5 | 50 | 12.9 | 77.1 | 85.2 |
| Example 7-15 | ADN(10) | 5 | 15 | 0.5 | 15.8 | 81.6 | 87.8 |
| Example 7-16 | ADN(5) | 5 | 10 | 1 | 18.3 | 79.2 | 81.3 |

It can be learned from the electrochemical test results in Table 7 that when both the compound containing a cyano group and the propyl propionate are added to the electrolyte, especially when the percentages of the two in the electrolyte satisfy 12 ≤ x + z ≤ 65 and 0.5 ≤ z/x ≤ 50, the thermal safety performance, cycling performance, and impedance reduction of the electrochemical device at high temperature and high voltage can be further optimized.

Table 8 shows influences of the percentages of the propylene carbonate and the propyl propionate on the thermal safety performance, low-temperature rate performance, and cycling performance of the electrochemical device at high temperature and high voltage, where the difference between Examples 8-1 to 8-8 and Example 1-1 lies only in the parameters listed in Table 8.

**Table 8**

| Example | y | z | y + z | z/y | Thickness swelling rate at temperature rise (%) | Discharge percentag e (%) | Capacity retention rate (%) |
|---|---|---|---|---|---|---|---|
| Example 1-1 | 0 | 0 | 0 | - | 20.2 | 65.3 | 78.9 |
| Example 8-1 | 15 | 20 | 35 | 1.3 | 15.2 | 82.1 | 81.7 |
| Example 8-2 | 20 | 40 | 60 | 2 | 14.8 | 85.7 | 89.9 |
| Example 8-3 | 15 | 50 | 65 | 3.3 | 16.1 | 81.7 | 86.4 |
| Example 8-4 | 5 | 5 | 10 | 1 | 17.4 | 68.2 | 80.7 |
| Example 8-5 | 10 | 60 | 65 | 6 | 18.2 | 68.9 | 80.1 |
| Example 8-6 | 30 | 10 | 40 | 0.3 | 19.2 | 65.7 | 80.2 |
| Example 8-7 | 0 | 20 | 20 | - | 19.8 | 66.2 | 79.3 |
| Example 8-8 | 20 | 0 | 20 | - | 19.1 | 67.9 | 79.6 |

It can be learned from the electrochemical test results in Table 8 that as compared with Examples 8-7 and 8-8, in Examples 1-1 and 8-1 to 8-6, both the propylene carbonate and the propyl propionate are added to the electrolyte, and the obtained corresponding electrochemical device shows better thermal safety performance, low-temperature rate performance, and cycling performance at high temperature and high voltage. As compared with Examples 8-4 to 8-6, in Examples 8-1 to 8-3, the percentages of the propylene carbonate and the propyl propionate satisfy 15 ≤ y + z ≤ 70 and 1 ≤ z/y ≤ 5, and the electrochemical performance of the obtained corresponding electrochemical device at high temperature and high voltage is further improved, especially the low-temperature rate performance is greatly improved.

Table 9 shows influences of the solvent and additive in the electrolyte on the thermal safety performance and cycling performance of the electrochemical device at high temperature and high voltage, where the difference between Examples 9-1 to 9-17 and Example 1-1 lies only in the parameters listed in Table 9.

**Table 9**

| | Electrolyte | Thickness swelling rate at temperature rise (%) | Thickness swelling after high-temperature storage (%) | Capacity retention rate (%) |
|---|---|---|---|---|
| Example 1-1 | 0 | 20.2 | 23.1 | 78.9 |
| Example 9-1 | SN(2) + PC(10) | 15.1 | 12.6 | 83.5 |
| Example 9-2 | SN(2) + PC(10) + PP(10) | 12.9 | 11.3 | 84.3 |
| Example 9-3 | SN(2) + PC(10) + PP(10) + FEC(4) | 13.6 | 10.2 | 85.1 |
| Example 9-4 | ADN(2) + PC(10) + PP(10) + PS(1) | 13.8 | 9.5 | 85.9 |
| Example 9-5 | ADN(2) + PC(10) + PP(10) + DTD(0.5) | 13.5 | 9.1 | 86.3 |
| Example 9-6 | ADN(2) + PC(10) + PP(10) + T3P(0.5) | 12.1 | 8.4 | 89.5 |
| Example 9-7 | EDN(2) + PC(10) + PP(10) + T3P(0.5) | 10.2 | 8.1 | 90.3 |
| Example 9-8 | HTCN(2) + PC(10) + PP(10) | 10.1 | 7.8 | 91.5 |
| Example 9-9 | TCEP(2) + PC(10) | 9.5 | 7.5 | 92.4 |
| Example 9-10 | TCEP(2) + PP(10) | 8.6 | 7.2 | 93.7 |
| Example 9-11 | HTCN(2) + PC(10) + PP(10) + PS(1) | 8.1 | 6.8 | 94.5 |
| Example 9-12 | TCEP(2) + PC(10) + PP(10) + PS(1) | 7.5 | 6.5 | 95.1 |
| Example 9-13 | TCEP(2) + PP(10) + PS(1) | 8.3 | 7.2 | 95.4 |
| Example 9-14 | TCEP(2) + PP(10) + T3P(0.5) | 7.2 | 7.5 | 95.6 |
| Example 9-15 | TCEP(2) + PP(10) + FEC(3) | 7.2 | 7.3 | 95.7 |
| Example 9-16 | TCEP(2) + PP(10) + VC(0.5) | 7.8 | 6.5 | 95.8 |
| Example 9-17 | TCEP(2) + PP(10) + DTD(0.5) | 7.3 | 5.8 | 96.1 |

It can be learned from the electrochemical test results in Table 9 that when the compound containing a cyano group, the propylene carbonate, the propyl propionate, the fluoroethylene carbonate, the 1,3-propane sultone, the vinyl sulfate, the vinylene carbonate, and the 1-propylphosphoric acid cyclic anhydride are used in combination in the electrolyte, the obtained electrochemical device shows excellent thermal safety performance, high-temperature storage performance, and cycling performance at high temperature and high voltage.

References to "an embodiment", "some embodiments", "one embodiment", "another example", "an example", "a specific example", or "some examples" in this specification mean the inclusion of specific features, structures, materials, or characteristics described in the embodiment or example in at least one embodiment or example of this application. Therefore, descriptions in various places throughout this specification, such as "in some embodiments", "in an embodiment", "in one embodiment", "in another example", "in one example", "in a specific example", or "an example", do not necessarily refer to the same embodiment or example of this application. In addition, specific features, structures, materials, or characteristics herein may be combined in any suitable manner in one or more embodiments or examples.

Although illustrative embodiments have been demonstrated and described, persons skilled in the art should understand that the foregoing embodiments should not be construed as any limitation on this application, and that some embodiments may be changed, replaced, and modified. The scope of the invention is defined by the appended claims.

## Claims

1. An electrochemical device, comprising a positive electrode, a negative electrode, and an electrolyte;
wherein the positive electrode comprises: a current collector, and a positive electrode active material layer;
wherein the positive electrode active material layer is located on at least one surface of the current collector, and comprises a first positive electrode active material layer and a second positive electrode active material layer, the first positive electrode active material layer being located between the current collector and the second positive electrode active material layer; wherein
the first positive electrode active material layer comprises a first binder,
the second positive electrode active material layer comprises a second binder,
**characterised in that** an adhesion force between the current collector and the first positive electrode active material layer is F 1 N/m, and a cohesion force of the second positive electrode active material layer is F2 N/m, F1 /F2 ≥ 6,
the first binder comprises polyacrylate containing polar functional groups,
and the second binder is a water-insoluble fluoropolymer,
wherein
the adhesion force and the cohesion force are determined as described in the description.

2. The electrochemical device according to claim 1, **characterized in that**, F₁ ≥ 200.

3. The electrochemical device according to claim 1 or 2, **characterized in that**, the first binder further satisfies at least one of the following conditions:
(1) the first binder is water-soluble;
or
(2) based on a mass of the first positive electrode active material layer, a mass fraction of the first binder is b%, wherein 2 ≤ b ≤ 20.

4. The electrochemical device according to any one of claims 1 to 3, **characterized in that**, based on a mass of the first positive electrode active material layer, a mass fraction of the first binder is b%, F₁ ≥ 200, 2 ≤ b ≤ 20, and F₁/b ≥ 10.

5. The electrochemical device according to any one of claims 1 to 4, **characterized in that**, the second binder further satisfies at least one of the following conditions:
(1) the second binder comprises polyvinylidene fluoride containing an α crystalline form; or
(2) based on a mass of the second positive electrode active material layer, a mass fraction of the second binder is a%, 0.5 ≤ a ≤ 5.

6. The electrochemical device according to any one of claims 1 to 5, **characterized in that**, based on a mass of the second positive electrode active material layer, a mass fraction of the second binder is a%, 5 ≤ F₂ ≤ 60, 0.5 ≤ a ≤ 5, and F₂/a ≥ 1.

7. The electrochemical device according to any one of claims 1 to 6, **characterized in that**, the first positive electrode active material layer comprises a water-soluble binder.

8. The electrochemical device according to any one of claims 1 to 7, **characterized in that**, based on a mass of the first positive electrode active material layer, a mass fraction of the first binder is b%; and the second positive electrode active material layer comprises a second binder, based on a mass of the second positive electrode active material layer, a mass fraction of the second binder is a%; wherein 2.5 ≤ a + b ≤ 25 and 1 ≤ b/a ≤ 40.

9. The electrochemical device according to any one of claims 1 to 8, **characterized in that**, a thickness of the first positive electrode active material layer is H₁ µm, and the positive electrode satisfies at least one of the following conditions:
(1) a thickness of the positive electrode active material layer is H µm, H₁/H ≤ 0.1; or
(2) $0.1 \leq {H}_{1} \leq 5 .$

10. The electrochemical device according to any one of claims 1 to 9, **characterized in that**, the electrolyte comprises a compound containing a cyano group.

11. The electrochemical device according to claim 10, **characterized in that**, the electrochemical device satisfies at least one of the following conditions:
(1) based on a mass of the electrolyte, a percentage of the compound containing a cyano group is x%, 0.1 ≤ x ≤ 15;
(2) based on a mass of the electrolyte, a percentage of the compound containing a cyano group is x%, F₁ ≥ 200 and F₁/x ≥ 13.33; or
(3) the compound containing a cyano group comprises at least one selected from the group consisting of succinonitrile, glutaronitrile, adiponitrile, 1,5-dicyanopentane, 1,6-dicyanohexane, tetramethylsuccinonitrile, 2-methylglutaronitrile, 2,4-dimethylglutaronitrile, 2,2,4,4-tetramethylglutaronitrile, 1,4-dicyanopentane, 1,2-dicyanobenzene, 1,3-dicyanobenzene, 1,4-dicyanobenzene, ethylene glycol bis(propionitrile) ether, 3,5-dioxa-pimelonitrile, 1,4-bis(cyanoethoxy)butane, diethylene glycol bis(2-cyanoethyl) ether, triethylene glycol bis(2-cyanoethyl) ether, tetraethylene glycol bis(2-cyanoethyl) ether, 1,3-bis(2-cyanoethoxy)propane, 1,4-bis(2-cyanoethoxy)butane, 1,5-bis(2-cyanoethoxy)pentane, ethylene glycol bis(4-cyanobutyl) ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane, and 1,2,5-tris(cyanoethoxy)pentane.

12. The electrochemical device according to any one of claims 1 to 11, **characterized in that**, the electrochemical device satisfies at least one of the following conditions:
(1) the electrolyte comprises propylene carbonate;
(2) the electrolyte comprises propylene carbonate, based on a mass of the electrolyte, a percentage of the propylene carbonate is y%, wherein 2 ≤ y ≤ 25; or
(3) the electrolyte comprises propylene carbonate, based on a mass of the electrolyte, a percentage of the propylene carbonate is y%, wherein F₂/y ≥ 0.5.

13. The electrochemical device according to any one of claims 1 to 12, **characterized in that**, the electrochemical device satisfies at least one of the following conditions:
(1) the electrolyte comprises propyl propionate, based on a mass of the electrolyte, a percentage of the propyl propionate is z%, wherein 5 ≤ z ≤ 50;
(2) the electrolyte comprises a compound containing a cyano group and propyl propionate; wherein based on a mass of the electrolyte, a percentage of the compound containing a cyano group is x% and a percentage of the propyl propionate is z%, wherein 12 ≤ x + z ≤ 65 and 0.5 ≤ z/x ≤ 50; or
(3) the electrolyte comprises propylene carbonate and propyl propionate; wherein based on a mass of the electrolyte, a percentage of the propylene carbonate is y% and a percentage of the propyl propionate is z%, wherein 15 ≤ y + z ≤ 70 and 1 ≤ z/y ≤ 5.

14. The electrochemical device according to any one of claims 1 to 13, **characterized in that**, the electrolyte comprises at least one selected from the group consisting of fluoroethylene carbonate, 1,3-propane sultone, vinyl sulfate, vinylene carbonate, and 1-propylphosphoric acid cyclic anhydride.

15. An electronic device, comprising the electrochemical device according to any one of claims 1 to 14.

## Patentansprüche

1. Elektrochemische Vorrichtung, umfassend eine positive Elektrode, eine negative Elektrode und einen Elektrolyten;
wobei die positive Elektrode Folgendes umfasst: einen Stromkollektor und eine Positivelektroden-Aktivmaterialschicht;
wobei sich die Positivelektroden-Aktivmaterialschicht auf mindestens einer Oberfläche des Stromkollektors befindet und eine erste Positivelektroden-Aktivmaterialschicht und eine zweite Positivelektroden-Aktivmaterialschicht umfasst, wobei sich die erste Positivelektroden-Aktivmaterialschicht zwischen dem Stromkollektor und der zweiten Positivelektroden-Aktivmaterialschicht befindet; wobei
die erste Positivelektroden-Aktivmaterialschicht ein erstes Bindemittel umfasst,
die zweite Positivelektroden-Aktivmaterialschicht ein zweites Bindemittel umfasst,
**dadurch gekennzeichnet, dass** eine Haftkraft zwischen dem Stromkollektor und der ersten Positivelektroden-Aktivmaterialschicht F₁ N/m beträgt und eine Kohäsionskraft der zweiten Positivelektroden-Aktivmaterialschicht F₂ N/m beträgt, F₁/F₂ ≥ 6 ist, das erste Bindemittel ein Polyacrylat umfasst, das polare funktionelle Gruppen enthält, und das zweite Bindemittel ein wasserunlösliches Fluorpolymer ist,
wobei die Haftkraft und die Kohäsionskraft wie in der Beschreibung beschrieben bestimmt werden.

2. Elektrochemische Vorrichtung nach Anspruch 1, **dadurch gekennzeichnet, dass** F₁ ≥ 200 ist.

3. Elektrochemische Vorrichtung nach Anspruch 1 oder 2, **dadurch gekennzeichnet, dass** das erste Bindemittel ferner mindestens eine der folgenden Bedingungen erfüllt:
(1) das erste Bindemittel ist wasserlöslich;
oder
(2) bezogen auf die Masse der ersten Positivelektroden-Aktivmaterialschicht beträgt der Massenanteil des ersten Bindemittels b %, wobei 2 ≤ b ≤ 20 ist.

4. Elektrochemische Vorrichtung nach einem der Ansprüche 1 bis 3, **dadurch gekennzeichnet, dass** bezogen auf die Masse der ersten Positivelektroden-Aktivmaterialschicht der Massenanteil des ersten Bindemittels b % beträgt, F₁ ≥ 200, 2 ≤ b ≤ 20 und F₁/b ≥ 10 ist.

5. Elektrochemische Vorrichtung nach einem der Ansprüche 1 bis 4, **dadurch gekennzeichnet, dass** das zweite Bindemittel ferner mindestens eine der folgenden Bedingungen erfüllt:
(1) das zweite Bindemittel umfasst Polyvinylidenfluorid, das eine α-Kristallform enthält; oder
(2) bezogen auf die Masse der zweiten Positivelektroden-Aktivmaterialschicht beträgt der Massenanteil des zweiten Bindemittels a %, 0,5 ≤ a ≤ 5.

6. Elektrochemische Vorrichtung nach einem der Ansprüche 1 bis 5, **dadurch gekennzeichnet, dass** bezogen auf die Masse der zweiten Positivelektroden-Aktivmaterialschicht der Massenanteil des zweiten Bindemittels a % beträgt, 5 ≤ F₂ ≤ 60, 0,5 ≤ a ≤ 5 und F₂/a ≥ 1 ist.

7. Elektrochemische Vorrichtung nach einem der Ansprüche 1 bis 6, **dadurch gekennzeichnet, dass** die erste Positivelektroden-Aktivmaterialschicht ein wasserlösliches Bindemittel umfasst.

8. Elektrochemische Vorrichtung nach einem der Ansprüche 1 bis 7, **dadurch gekennzeichnet, dass** bezogen auf die Masse der ersten Positivelektroden-Aktivmaterialschicht der Massenanteil des ersten Bindemittels b % beträgt; und die zweite Positivelektroden-Aktivmaterialschicht ein zweites Bindemittel umfasst, wobei bezogen auf die Masse der zweiten Positivelektroden-Aktivmaterialschicht der Massenanteil des zweiten Bindemittels a % beträgt; wobei 2,5 ≤ a + b ≤ 25 und 1 ≤ b/a ≤ 40 ist.

9. Elektrochemische Vorrichtung nach einem der Ansprüche 1 bis 8, **dadurch gekennzeichnet, dass** eine Dicke der ersten Positivelektroden-Aktivmaterialschicht H₁ µm beträgt und die positive Elektrode mindestens eine der folgenden Bedingungen erfüllt:
(1) eine Dicke der Positivelektroden-Aktivmaterialschicht beträgt H µm, H₁/H ≤ 0,1; oder
(2) $0 , 1 \leq {H}_{1} \leq 5 .$

10. Elektrochemische Vorrichtung nach einem der Ansprüche 1 bis 9, **dadurch gekennzeichnet, dass** der Elektrolyt eine Cyanogruppe enthaltende Verbindung umfasst.

11. Elektrochemische Vorrichtung nach Anspruch 10, **dadurch gekennzeichnet, dass** die elektrochemische Vorrichtung mindestens eine der folgenden Bedingungen erfüllt:
(1) bezogen auf die Masse des Elektrolyten beträgt der prozentuale Anteil der eine Cyanogruppe enthaltenden Verbindung x %, 0,1 ≤ x ≤ 15;
(2) bezogen auf die Masse des Elektrolyten beträgt der prozentuale Anteil der eine Cyanogruppe enthaltenden Verbindung x %, F₁ ≥ 200 und F₁/x ≥ 13,33; oder
(3) die eine Cyanogruppe enthaltende Verbindung umfasst mindestens eine, ausgewählt aus der Gruppe bestehend aus Succinonitril, Glutaronitril, Adiponitril, 1,5-Dicyanopentan, 1,6-Dicyanohexan, Tetramethylsuccinonitril, 2-Methylglutaronitril, 2,4-Dimethylglutaronitril, 2,2,4,4-Tetramethylglutaronitril, 1,4-Dicyanopentan, 1,2-Dicyanobenzol, 1,3-Dicyanobenzol, 1,4-Dicyanobenzol, Ethylenglycolbis(propionitril)ether, 3,5-Dioxa-pimelonitril, 1,4-Bis(cyanoethoxy)butan, Diethylenglycolbis(2-cyanoethyl)ether, Triethylenglycolbis(2-cyanoethyl)ether, Tetraethylenglycolbis(2-cyanoethyl)ether, 1,3-Bis(2-cyanoethoxy)propan, 1,4-Bis(2-cyanoethoxy)butan, 1,5-Bis(2-cyanoethoxy)pentan, Ethylenglycolbis(4-cyanobutyl)ether, 1,4-Dicyano-2-buten, 1,4-Dicyano-2-methyl-2-buten, 1,4-Dicyano-2-ethyl-2-buten, 1,4-Dicyano-2,3-dimethyl-2-buten, 1,4-Dicyano-2,3-diethyl-2-buten, 1,6-Dicyano-3-hexen, 1,6-Dicyano-2-methyl-3-hexen, 1,3,5-Pentantricarbonitril, 1,2,3-Propantricarbonitril, 1,3,6-Hexantricarbonitril, 1,2,6-Hexantricarbonitril, 1,2,3-Tris(2-cyanoethoxy)propan, 1,2,4-Tris(2-cyanoethoxy)butan, 1,1,1-Tris(cyanoethoxymethylen)ethan, 1,1,1-Tris(cyanoethoxymethylen)propan, 3-Methyl-1,3,5-tris(cyanoethoxy)pentan, 1,2,7-Tris(cyanoethoxy)heptan, 1,2,6-Tris(cyanoethoxy)hexan und 1,2,5-Tris(cyanoethoxy)pentan.

12. Elektrochemische Vorrichtung nach einem der Ansprüche 1 bis 11, **dadurch gekennzeichnet, dass** die elektrochemische Vorrichtung mindestens eine der folgenden Bedingungen erfüllt:
(1) der Elektrolyt umfasst Propylencarbonat;
(2) der Elektrolyt umfasst Propylencarbonat, bezogen auf die Masse des Elektrolyten beträgt der prozentuale Anteil des Propylencarbonats y %, wobei 2 ≤ y ≤ 25 ist; oder
(3) der Elektrolyt umfasst Propylencarbonat, bezogen auf die Masse des Elektrolyten beträgt der prozentuale Anteil des Propylencarbonats y %, wobei F₂/y ≥ 0,5 ist.

13. Elektrochemische Vorrichtung nach einem der Ansprüche 1 bis 12, **dadurch gekennzeichnet, dass** die elektrochemische Vorrichtung mindestens eine der folgenden Bedingungen erfüllt:
(1) der Elektrolyt umfasst Propylpropionat, bezogen auf die Masse des Elektrolyten beträgt der prozentuale Anteil des Propylpropionats z %, wobei 5 ≤ z ≤ 50 ist;
(2) der Elektrolyt umfasst eine Cyanogruppe enthaltende Verbindung und Propylpropionat; wobei bezogen auf die Masse des Elektrolyten der prozentuale Anteil der eine Cyanogruppe enthaltenden Verbindung x % und der prozentuale Anteil des Propylpropionats z % beträgt, wobei 12 ≤ x + z ≤ 65 und 0,5 ≤ z/x ≤ 50 ist; oder
(3) der Elektrolyt umfasst Propylencarbonat und Propylpropionat; wobei bezogen auf die Masse des Elektrolyten der prozentuale Anteil des Propylencarbonats y % und der prozentuale Anteil des Propylpropionats z % beträgt, wobei 15 ≤ y + z ≤ 70 und 1 ≤ z/y ≤ 5 ist.

14. Elektrochemische Vorrichtung nach einem der Ansprüche 1 bis 13, **dadurch gekennzeichnet, dass** der Elektrolyt mindestens eine, ausgewählt aus der Gruppe bestehend aus Fluorethylencarbonat, 1,3-Propansulton, Vinylsulfat, Vinylencarbonat und cyclischem 1-Propylphosphorsäureanhydrid, umfasst.

15. Elektronische Vorrichtung, umfassend die elektrochemische Vorrichtung nach einem der Ansprüche 1 bis 14.

## Revendications

1. Dispositif électrochimique, comprenant une électrode positive, une électrode négative et un électrolyte ;
dans lequel l'électrode positive comprend : un collecteur de courant et une couche de matériau actif d'électrode positive ;
dans lequel la couche de matériau actif d'électrode positive est située sur au moins une surface du collecteur de courant et comprend une première couche de matériau actif d'électrode positive et une deuxième couche de matériau actif d'électrode positive, la première couche de matériau actif d'électrode positive étant située entre le collecteur de courant et la deuxième couche de matériau actif d'électrode positive ; dans lequel
la première couche de matériau actif d'électrode positive comprend un premier liant,
la deuxième couche de matériau actif d'électrode positive comprend un deuxième liant,
**caractérisé en ce qu'**une force d'adhérence entre le collecteur de courant et la première couche de matériau actif d'électrode positive est de F₁ N/m, et une force de cohésion de la deuxième couche de matériau actif d'électrode positive est de F₂ N/m, F₁/F₂ ≥ 6, le premier liant comprend un polyacrylate contenant des groupes fonctionnels polaires, et le deuxième liant est un fluoropolymère insoluble dans l'eau,
dans lequel la force d'adhérence et la force de cohésion sont déterminées comme décrit dans la description.

2. Dispositif électrochimique selon la revendication 1, **caractérisé en ce que** F₁ ≥ 200.

3. Dispositif électrochimique selon la revendication 1 ou 2, **caractérisé en ce que** le premier liant satisfait en outre au moins l'une des conditions suivantes :
(1) le premier liant est soluble dans l'eau ;
ou
(2) par rapport à la masse de la première couche de matériau actif d'électrode positive, la fraction massique du premier liant est de b %, où 2 ≤ b ≤ 20.

4. Dispositif électrochimique selon l'une quelconque des revendications 1 à 3, **caractérisé en ce que**, par rapport à la masse de la première couche de matériau actif d'électrode positive, la fraction massique du premier liant est de b %, F₁ ≥ 200, 2 ≤ b ≤ 20 et F₁/b ≥ 10.

5. Dispositif électrochimique selon l'une quelconque des revendications 1 à 4, **caractérisé en ce que** le deuxième liant satisfait en outre au moins l'une des conditions suivantes :
(1) le deuxième liant comprend du poly(fluorure de vinylidène) contenant une forme cristalline α ; ou
(2) par rapport à la masse de la deuxième couche de matériau actif d'électrode positive, la fraction massique du deuxième liant est de a %, 0,5 ≤ a ≤ 5.

6. Dispositif électrochimique selon l'une quelconque des revendications 1 à 5, **caractérisé en ce que**, par rapport à la masse de la deuxième couche de matériau actif d'électrode positive, la fraction massique du deuxième liant est de a %, 5 ≤ F₂ ≤ 60, 0,5 ≤ a ≤ 5 et F₂/a ≥ 1.

7. Dispositif électrochimique selon l'une quelconque des revendications 1 à 6, **caractérisé en ce que** la première couche de matériau actif d'électrode positive comprend un liant soluble dans l'eau.

8. Dispositif électrochimique selon l'une quelconque des revendications 1 à 7, **caractérisé en ce que**, par rapport à la masse de la première couche de matériau actif d'électrode positive, la fraction massique du premier liant est de b % ; et la deuxième couche de matériau actif d'électrode positive comprend un deuxième liant, par rapport à la masse de la deuxième couche de matériau actif d'électrode positive, la fraction massique du deuxième liant est de a % ; où 2,5 ≤ a + b ≤ 25 et 1 ≤ b/a ≤ 40.

9. Dispositif électrochimique selon l'une quelconque des revendications 1 à 8, **caractérisé en ce qu'**une épaisseur de la première couche de matériau actif d'électrode positive est de H₁ µm, et l'électrode positive satisfait au moins l'une des conditions suivantes :
(1) une épaisseur de la couche de matériau actif d'électrode positive est de H µm, H₁/H ≤ 0,1 ; ou
(2) $0 , 1 \leq {H}_{1} \leq 5 .$

10. Dispositif électrochimique selon l'une quelconque des revendications 1 à 9, **caractérisé en ce que** l'électrolyte comprend un composé contenant un groupe cyano.

11. Dispositif électrochimique selon la revendication 10, **caractérisé en ce que** le dispositif électrochimique satisfait au moins l'une des conditions suivantes :
(1) par rapport à la masse de l'électrolyte, le pourcentage du composé contenant un groupe cyano est de x %, 0,1 ≤ x ≤ 15 ;
(2) par rapport à la masse de l'électrolyte, le pourcentage du composé contenant un groupe cyano est de x %, F₁ ≥ 200 et F₁/x ≥ 13,33 ; ou
(3) le composé contenant un groupe cyano comprend au moins un élément choisi dans le groupe constitué par succinonitrile, glutaronitrile, adiponitrile, 1,5-dicyanopentane, 1,6-dicyanohexane, tétraméthylsuccinonitrile, 2-méthylglutaronitrile, 2,4-diméthylglutaronitrile, 2,2,4,4-tétraméthylglutaronitrile, 1,4-dicyanopentane, 1,2-dicyanobenzène, 1,3-dicyanobenzène, 1,4-dicyanobenzène, éther bis(propionitrile) d'éthylène glycol, 3,5-dioxa-pimélonitrile, 1,4-bis(cyanoéthoxy)butane, éther bis(2-cyanoéthylique) de diéthylène glycol, éther bis(2-cyanoéthylique) de triéthylène glycol, éther bis(2-cyanoéthylique) de tétraéthylène glycol, 1,3-bis(2-cyanoéthoxy)propane, 1,4-bis(2-cyanoéthoxy)butane, 1,5-bis(2-cyanoéthoxy)pentane, éther bis(4-cyanobutylique) d'éthylène glycol, 1,4-dicyano-2-butène, 1,4-dicyano-2-méthyl-2-butène, 1,4-dicyano-2-éthyl-2-butène, 1,4-dicyano-2,3-diméthyl-2-butène, 1,4-dicyano-2,3-diéthyl-2-butène, 1,6-dicyano-3-hexène, 1,6-dicyano-2-méthyl-3-hexène, 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoéthoxy)propane, 1,2,4-tris(2-cyanoéthoxy)butane, 1,1,1-tris(cyanoéthoxyméthylène)éthane, 1,1,1-tris(cyanoéthoxyméthylène)propane, 3-méthyl-1,3,5-tris(cyanoéthoxy)pentane, 1,2,7-tris(cyanoéthoxy)heptane, 1,2,6-tris(cyanoéthoxy)hexane et 1,2,5-tris(cyanoéthoxy)pentane.

12. Dispositif électrochimique selon l'une quelconque des revendications 1 à 11, **caractérisé en ce que** le dispositif électrochimique satisfait au moins l'une des conditions suivantes :
(1) l'électrolyte comprend du carbonate de propylène ;
(2) l'électrolyte comprend du carbonate de propylène, par rapport à la masse de l'électrolyte, le pourcentage du carbonate de propylène est de y %, où 2 ≤ y ≤ 25 ; ou
(3) l'électrolyte comprend du carbonate de propylène, par rapport à la masse de l'électrolyte, le pourcentage du carbonate de propylène est de y %, où F₂/y ≥ 0,5.

13. Dispositif électrochimique selon l'une quelconque des revendications 1 à 12, **caractérisé en ce que** le dispositif électrochimique satisfait au moins l'une des conditions suivantes :
(1) l'électrolyte comprend du propionate de propyle, par rapport à la masse de l'électrolyte, le pourcentage du propionate de propyle est de z %, où 5 ≤ z ≤ 50 ;
(2) l'électrolyte comprend un composé contenant un groupe cyano et du propionate de propyle ; dans lequel, par rapport à la masse de l'électrolyte, le pourcentage du composé contenant un groupe cyano est de x % et le pourcentage du propionate de propyle est de z %, où 12 ≤ x + z ≤ 65 et 0,5 ≤ z/x ≤ 50 ; ou
(3) l'électrolyte comprend du carbonate de propylène et du propionate de propyle ; dans lequel, par rapport à la masse de l'électrolyte, le pourcentage du carbonate de propylène est de y % et le pourcentage du propionate de propyle est de z %, où 15 ≤ y + z ≤ 70 et 1 ≤ z/y ≤ 5.

14. Dispositif électrochimique selon l'une quelconque des revendications 1 à 13, **caractérisé en ce que** l'électrolyte comprend au moins un élément choisi dans le groupe constitué par carbonate de fluoroéthylène, 1,3-propane sultone, sulfate de vinyle, carbonate de vinylène et anhydride cyclique d'acide 1-propylphosphorique.

15. Dispositif électronique, comprenant le dispositif électrochimique selon l'une quelconque des revendications 1 à 14.
